# EUROPEAN PATENT SPECIFICATION

(11) **EP 3 685 191 B1**
(45) Date of publication and mention of the grant of the patent: **04.05.2022**
(21) Application number: 17787665.3
(22) Date of filing: 21.09.2017
(51) Int. Cl.: G01V 1/18, G01H 9/00

(54) **SEISMIC SENSOR**
SEISMISCHER SENSOR
CAPTEUR SISMIQUE

(43) Date of publication of application: 29.07.2020
(73) Proprietor: Rosneft Oil Company, Moscow 117997 (RU); BP Exploration Operating Company Limited, Sunbury-on-Thames, Middlesex TW16 7BP (GB)
(72) Inventor: CONTANT, Mathias, Tananger 4056 (NO)
(74) Representative: Eisenführ Speiser
(86) International application number: PCT/RU2017/000689
(87) International publication number: WO 2019/059798

(56) References cited:
- US-A- 4 694 162
- US-A1- 2006 236 762
- US-A1- 2017 003 407

## Description

### BACKGROUND

The disclosure relates generally to devices for performing seismic surveys. More particularly, the disclosure relates to seismic sensors or nodes.

Seismic surveying, or reflection seismology, is used to map the Earth's subsurface. A controlled seismic source emits low frequency seismic waves that travel through the subsurface of the Earth. At interfaces between dissimilar rock layers, the seismic waves are partially reflected. The reflected waves return to the surface where they are detected by one or more seismic sensors. In particular, the seismic sensors detect and measure vibrations induced by the waves. Ground vibrations detected by the seismic sensors at the earth surface can have a very wide dynamic range, with displacement distances ranging from centimeters to angstroms. Data recorded by the seismic sensors is analyzed to reveal the structure and composition of the subsurface.

Conventional seismic sensors (e.g., geophones) are usually made with an electric coil of wire immersed in a strong magnetic field. These electromagnetic sensors can be constructed as either moving magnet or moving coil types. In the moving coil version, the magnet is fixed to the case, which is then firmly planted in the earth. The moving electrical coil is immersed in the magnetic field gap of the fixed magnet and the coil is loosely coupled to the outer housing of the sensor by soft springs that restrict movement of the coil along a single axis. As the coil moves relative to the fixed magnet, it progressively cuts through lines of magnetic flux, thereby generating a voltage and current at the electrical terminals of the coil in proportion to the velocity of ground displacement (e.g., vibrations). In the moving coil type, the coil defines the mass in the seismic sensor that moves in response to the ground vibrations.

Another type of seismic sensor relies on capacitance to generate the electrical signal. These are typically constructed as Microelectromechanical systems (MEMS) using micro machined silicon with metal plating applied to facing components on opposite sides of a small plated and spring loaded mass. These MEMS sensors often have the advantage of small size and weight compared to a moving coil geophone. The movement of the MEMS proof mass relative to the outer fixed plates creates variable capacitance that is detected as a signal proportional to the acceleration of the sensor displacement.

A seismic survey apparatus according to US 2017/003407 A1 includes a body, a proof mass and at least one sensor arranged to detect movement of the proof mass relative to the body. In addition, the seismic survey apparatus includes electronic circuitry connected to the at least one sensor. The electronic circuitry is configured to receive and process an output of the sensor. A power supply is arranged to provide electrical power to the electronic circuitry with the power supply being an integral part of the proof mass.

An optical-electrical geophone which generates a binary signal is described in US 4,694,162. The geophone utilizes an optical fiber for the return transmission of a light source in the geophone. The geophone contains a light chopping means which oscillates in response to vibrations imparted into a geologic formation. As the chopping means such as a baffle or a tubular member vibrates, it chops the light signal and creates an on/off light pattern, i.e., binary signal. The light passing through a slit in the baffle or tubular member is returned to the seismic vehicle through an optical fiber for further processing. The optical-electrical geophone creates a binary signal directly without the use of clipping electronics and magnets or coils used in conventional geophones.

US 2006/236762 A1 discloses a fiber optic accelerometer. A proof mass is suspended in a cavity in a housing. The proof mass moves along a sensing axis in response to linear acceleration. Elastic support members are connected between the proof mass and the housing and are arranged to exert a reaction force on the proof mass in response to displacement of the proof mass along the sensing axis. An optical fiber is connected between the proof mass and opposite sidewall portions of the housing such that displacement of the proof mass along the sensing axis elongates a first portion of the optical fiber and shortens another portion. An optical signal source provides a broadband optical signal input to the optical fiber. A fiber optic Bragg grating is formed in the optical fiber and arranged to reflect a portion of the optical signal. Acceleration of the proof mass modulates the wavelength of the reflected optical signal.

### BRIEF SUMMARY OF THE DISCLOSURE

Embodiments of seismic sensors for a seismic surveys are disclosed herein. In one embodiment, a seismic sensor comprises an outer housing having a central axis, a first end, and a second end opposite the first end. The first end comprises a portion made of a clear/transparent material configured to transmit light having a frequency in the visible or infrared range of the electromagnetic spectrum. In addition, the seismic sensor comprises a proof mass moveably disposed in the outer housing. The proof mass includes a power source. Further, the seismic sensor comprises a sensor element disposed in the outer housing and configured to detect the movement of the outer housing relative to the proof mass. Still further, the seismic sensor comprises electronic circuitry coupled to the sensor element and the power source, the electronic circuitry being configured to emit light. Moreover, the seismic sensor comprises a light guide assembly having a first end adjacent the clear portion of the first end of the outer housing and a second end adjacent the electronic circuitry. The light guide assembly is configured to transmit light in an axial direction between the first end of the light guide assembly and the clear section and to transmit light in a non-axial direction between the second end of the light guide assembly and the electronic circuitry.

In another embodiment, a seismic sensor for a seismic survey comprises an outer housing having a central axis, a first end, and a second end opposite the first end and an inner cavity. In addition, the seismic sensor comprises a proof mass moveably disposed in the outer housing. The proof mass includes a power source and electronic circuitry coupled to the power source, the electronic circuitry being configured to emit light. Further, the seismic sensor comprises a sensor element disposed in the inner cavity and configured to detect the movement of the outer housing relative to the proof mass. The sensor element is coupled to the electronic circuitry. Still further, the seismic sensor comprises a light guide assembly configured to transmit light from the electronic circuitry to the outer housing. The light guide assembly includes a first light guide fixably coupled to the proof mass and a second light guide fixably coupled to the outer housing.

Embodiments described herein comprise a combination of features and advantages intended to address various shortcomings associated with certain prior devices, systems, and methods. The foregoing has outlined rather broadly the features and technical advantages of the invention in order that the detailed description of the invention that follows may be better understood. The various characteristics described above, as well as other features, will be readily apparent to those skilled in the art upon reading the following detailed description, and by referring to the accompanying drawings. It should be appreciated by those skilled in the art that the conception and the specific embodiments disclosed may be readily utilized as a basis for modifying or designing other structures for carrying out the same purposes of the invention. It should also be realized by those skilled in the art that such equivalent constructions do not depart from the scope of the invention as set forth in the appended claims.

### BRIEF DESCRIPTION OF THE DRAWINGS

For a detailed description of the preferred embodiments of the invention, reference will now be made to the accompanying drawings in which:
Figure 1 is a schematic view of a seismic sensing system including a plurality of seismic sensors;
Figure 2 is a perspective view of an embodiment of a seismic sensor in accordance with the principles described herein;
Figure 3 is a longitudinal cross-sectional view of the seismic sensor of Figure 2;
Figure 4 is a perspective end view of the end cap of Figure 2;
Figure 5 is an enlarged partial cross-sectional view of the seismic sensor of Figure 2 illustrating the coupling between the cap and the body of the outer housing;
Figure 6 is a perspective view of the inductive spool assembly of Figure 3;
Figure 7 is a perspective side view of the carrier of Figure 3;
Figure 8 is a perspective side view of the carrier of Figure 3;
Figure 9 is an enlarged cross-sectional view of the seismic sensor of Figure 2;
Figure 10 is an enlarged perspective view of the lower connection member and sensor element of Figure 3;
Figure 11 is a partial cross-sectional perspective view of the seismic sensor of Figure 2;
Figure 12 is a perspective view of the battery and the circuit board of Figure 3;
Figure 13 is an enlarged perspective view of the battery, the circuit board and one tab of Figure 3;
Figure 14 is a perspective view of an embodiment of a seismic sensor in accordance with the principles described herein;
Figure 15 is a longitudinal cross-sectional view of the seismic sensor of Figure 14;
Figure 16 is a top perspective partial cut away view of the seismic sensor of Figure 14;
Figure 17 is an enlarged perspective partial cut away view of the seismic sensor of Figure 14;
Figure 18 is an enlarged cross-sectional view of the seismic sensor of Figure 14;
Figure 19 is an enlarged perspective partial cut-away view of the seismic sensor of Figure 14;
Figure 20 is an enlarged cross-sectional view of the seismic sensor of Figure 14;
Figure 21 is a perspective view of the battery and tabs of Figure 16; and
Figure 22 is a top view of an embodiment of a tab in accordance with the principles described herein.

### DETAILED DESCRIPTION OF THE PREFERRED EMBODIMENTS

The following discussion is directed to various exemplary embodiments. However, one skilled in the art will understand that the examples disclosed herein have broad application, and that the discussion of any embodiment is meant only to be exemplary of that embodiment, and not intended to suggest that the scope of the disclosure, including the claims, is limited to that embodiment.

Certain terms are used throughout the following description and claims to refer to particular features or components. As one skilled in the art will appreciate, different persons may refer to the same feature or component by different names. This document does not intend to distinguish between components or features that differ in name but not function. The drawing figures are not necessarily to scale. Certain features and components herein may be shown exaggerated in scale or in somewhat schematic form and some details of conventional elements may not be shown in interest of clarity and conciseness.

In the following discussion and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device, that connection may be through a direct connection, or through an indirect connection via other devices, components, and connections. In addition, as used herein, the terms "axial" and "axially" generally mean along or parallel to a central axis (e.g., central axis of a body or a port), while the terms "radial" and "radially" generally mean perpendicular to the central axis. For instance, an axial distance refers to a distance measured along or parallel to the central axis, and a radial distance means a distance measured perpendicular to the central axis. Any reference to up or down in the description and the claims will be made for purposes of clarity, with "up", "upper", "upwardly" "down", "lower", and "downwardly" meaning the position or direction in normal use.

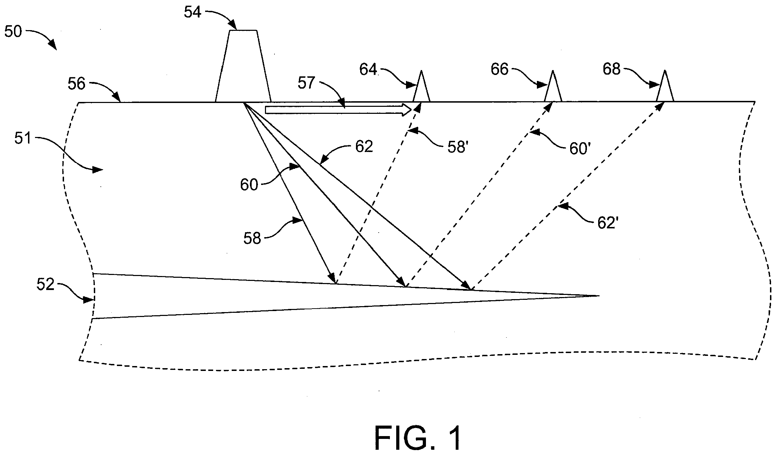

Referring now to Figure 1, a schematic representation of a seismic surveying system 50 for surveying a subsurface earthen formation 51 is shown. As shown in Figure 1, the subsurface 51 has a relatively uniform composition with the exception of layer 52, which may be, for example, a different type of rock as compared to the remainder of subsurface 51. As a result, layer 52 may have a different density, elastic velocity, etc. as compared to the remainder of subsurface 51.

Surveying system 50 includes a seismic source 54 disposed on the surface 56 of the earth and a plurality of seismic sensors 64, 66, 68 firmly coupled to the surface 56. The seismic source 54 generates and outputs controlled seismic waves 58, 60, 62 that are directed downward into the subsurface 51 and propagate through the subsurface 51. In general, seismic source 54 can be any suitable seismic source known in the art including, without limitation, explosive seismic sources, vibroseis trucks and accelerated weight drop systems also known as thumper trucks. For example, a thumper truck may strike the surface 56 of the earth with a weight or "hammer" creating a shock which propagates through the subsurface 51 as seismic waves.

Due to the differences in the density and/or elastic velocity of layer 52 as compared to the remainder of subsurface 51, the seismic waves 58, 60, 62 are reflected, at least partially, from the surface of the layer 52. The reflected seismic waves 58', 60', 62' propagate upwards from layer 52 to the surface 56 where they are detected by seismic sensors 64, 66, 68.

The seismic source 54 may also induce surface interface waves 57 that generally travel along the surface 56 with relatively slow velocities, and are detected concurrently with the deeper reflected seismic waves 58', 60', 62'. The surface interface waves 57 generally have a greater amplitude than the reflected seismic waves 58', 60', 62' due to cumulative effects of energy loss during propagation of the reflected seismic waves 58', 60', 62' such as geometrical spreading of the wave front, interface transmission loss, weak reflection coefficient and travel path absorption. The cumulative effect of these losses may amount to a 75dB, and in cases more than 100dB, in amplitude difference between various waveforms recorded by sensors 64, 66, 68.

The sensors 64, 66, 68 detect the various waves 57, 58', 60', 62', and then store and/or transmit data indicative of the detected waves 57, 58', 60', 62'. This data can be analyzed to determine information about the composition of the subsurface 51 such as the location of layer 52.

Although seismic surveying system 50 is shown and described as a surface or land-based system, embodiments described herein can also be used in connection with seismic surveys in transition zones (e.g., marsh or bog lands, areas of shallow water such as between land and sea) and marine seismic survey systems in which the subsurface of the earthen formation (e.g., subsurface 51) is covered by a layer of water. In marine-based systems, the seismic sensors (e.g., seismic sensors 64, 66, 68) may be positioned in or on the seabed, or alternatively on or within the water. In addition, in such marine-based systems, alternative types of seismic sources (e.g., seismic sources 54) may be used including, without limitation, air guns and plasma sound sources.

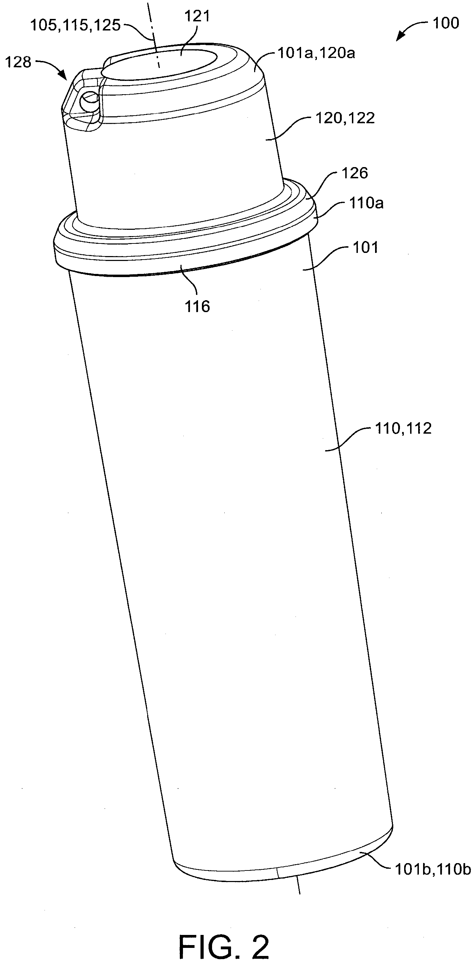

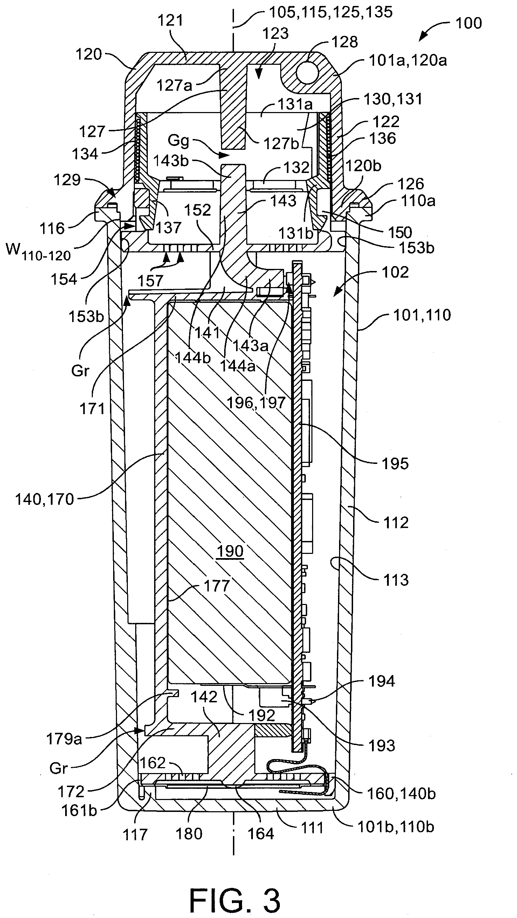

Referring now to Figures 2 and 3, an embodiment of a seismic sensor 100 is shown. In general, seismic sensor 100 can be used in any seismic survey system. For example, sensor 100 can be used for any one or more of sensors 64, 66, 68 of seismic surveying system 50 shown in Figure 1 and described above. Although sensor 100 can be used in land or marine seismic survey systems, it is particularly suited to land-based seismic surveys.

In this embodiment, seismic sensor 100 includes an outer housing 101, an inductive spool assembly 130 disposed within housing 101, a carrier 140 disposed in housing 101 adjacent inductive spool assembly 130, and a sensor element 180 disposed within housing 101 and coupled to carrier 140. A power source or supply 190 and electronic circuitry 195 are removably mounted to carrier 140 within housing 101. In this embodiment, power supply 190 is a battery and electronic circuitry 195 is in the form of a circuit board (e.g., PCB). Thus, power supply 190 may also be referred to as battery 190 and electronic circuitry 195 may also be referred to as circuit board 195.

Referring still to Figures 2 and 3, housing 101 has a central or longitudinal axis 105, a first or upper end 101a, a second or lower end 101b, and an inner chamber or cavity 102. As will be described in more detail below, in this embodiment, ends 101a, 101b are closed and inner cavity 102 is sealed and isolated from the surrounding environment outside sensor 100, thereby protecting the sensitive components disposed within housing 101 from the environment (e.g., water, dirt, etc.).

In this embodiment, housing 101 includes a generally cup-shaped body 110 and an inverted cup-shaped cap 120 fixably attached to body 110. In particular, body 110 has a central or longitudinal axis 115 coaxially aligned with axis 105, a first or upper end 110a, and a second or lower end 110b defining lower end 101b of housing 101. In addition, body 110 includes a planar cylindrical base 111 at lower end 110b and a tubular sleeve 112 extending axially upward from base 111 to upper end 110a. Base 111 closes sleeve 112 at lower end 110b, however, sleeve 112 and body 110 are open at upper end 110a. As a result, body 110 includes a receptacle 113 extending axially from upper end 110a to base 111. Receptacle 113 forms part of inner cavity 102 of housing 101. As will be described in more detail below, open upper end 110a is closed with cap 120. An annular flange 116 extends radially outward from sleeve 112 at upper end 110a and an annular raised lip or shoulder 117 extends axially upward from base 111 into cavity 113. In this embodiment, the entire body 110 (including base 111, sleeve 112, and flange 116) is made via injection molding into a single piece of polycarbonate.

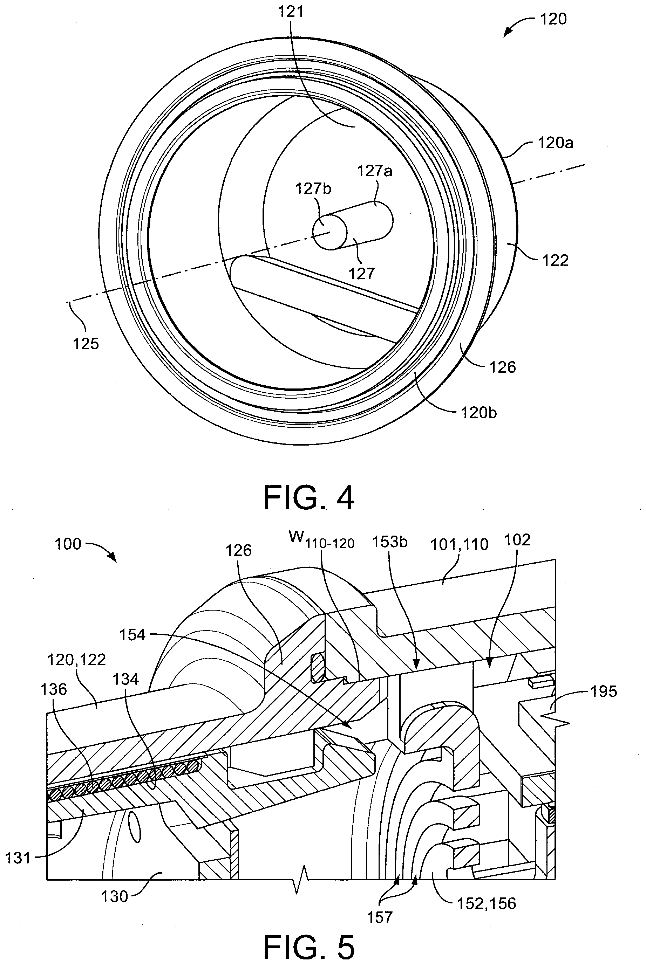

Referring now to Figures 2-4, cap 120 has a central or longitudinal axis 125 coaxially aligned with axis 105, a first or upper end 120a defining upper end 101a of housing 101, and a second or lower end 120b. In this embodiment, cap 120 has the general shape of an inverted cup. In particular, cap 120 includes a planar cylindrical top 121 at upper end 120a and a tubular sleeve 122 extending axially downward from top 121 to lower end 120b. Top 121 closes sleeve 122 at upper end 120a, however, sleeve 122 and cap 120 are open at lower end 120b. As a result, cap 120 includes an inner chamber or cavity 123 extending axially from lower end 120b to top 121. An annular flange 126 extends radially outward from sleeve 122 proximal lower end 120b. In addition, an elongate cylindrical light guide 127 extends axially downward from top 121 into cavity 113. Guide 127 is coaxially disposed within cap 120 (e.g., guide 127 has a central axis coaxially aligned with axis 125) and has a first or upper end 127a fixably attached to top 121 and a second or lower end 127b distal top 121.

As will be described in more detail below, guide 127 forms part of a light guide assembly for wirelessly communicating data to/from circuit board 195 through top 121 via the transmission of light. In embodiments described herein, the light transmitted by the light guide assembly has a frequency in the visible or infrared range of the electromagnetic spectrum (e.g., frequency of 3.0 THz to 300.0 THz and wavelength of 1.0 µm to 100 µm). In one embodiment, the light transmitted by the light guide assembly is in the infrared range of the electromagnetic spectrum with a wavelength of 850 nm. To facilitate the transmission of light through guide 127, it is made of a clear/transparent material, and to facilitate the transmission of light through top 121, it is made of a clear/transparent material. In this embodiment, the entire cap 120 (including top 121, sleeve 122, and guide 127) is made via injection molding into a single piece of clear polycarbonate.

As best shown in Figures 2 and 3, in this embodiment, a connector 128 is provided on the outside of cap 120 at upper end 120a. In this embodiment, connector 128 is an eye connector or throughbore to which a rope, lanyard, hook, carabiner or the like can be releasably attached. This can facilitate the carrying of sensor 100 during deployment and retrieval and/or facilitate the location of sensors 100 for retrieval.

Referring now to Figure 3, cap 120 is fixably attached to body 110. In particular, cap 120 is coaxially aligned with body 110 with lower end 120b of cap 120 seated within upper end 110a of body 110 and annular flanges 116, 126 axially abutting each other. Body 110 and cap 120 are sized such that an interference fit is provided between lower end 120b of cap 120 and upper end 110a of body 110 when lower end 120b is seated in upper end 110a. In this embodiment, body 110 and cap 120 are made of the same material (polycarbonate), and thus, can be ultrasonically welded together to fixably secure cap 120 to body 110. More specifically, an annular ultrasonic weld W₁₁₀₋₁₂₀ is formed between the opposed radially outer surface and radially inner surface of sleeves 122, 112, respectively, at end 120b, 110a, respectively. Weld W₁₁₀₋₁₂₀ defines an annular primary seal between cap 120 and body 110 that prevents fluid communication between cavities 113, 123 and the environment surrounding sensor 100. In this embodiment, a secondary or backup annular seal assembly 129 is provided between cap 120 and body 110. Seal assembly 129 includes an annular O-ring seal seated in an annular recess provided in the bottom surface of flange 126. The O-ring seal is axially compressed between flanges 116, 126.

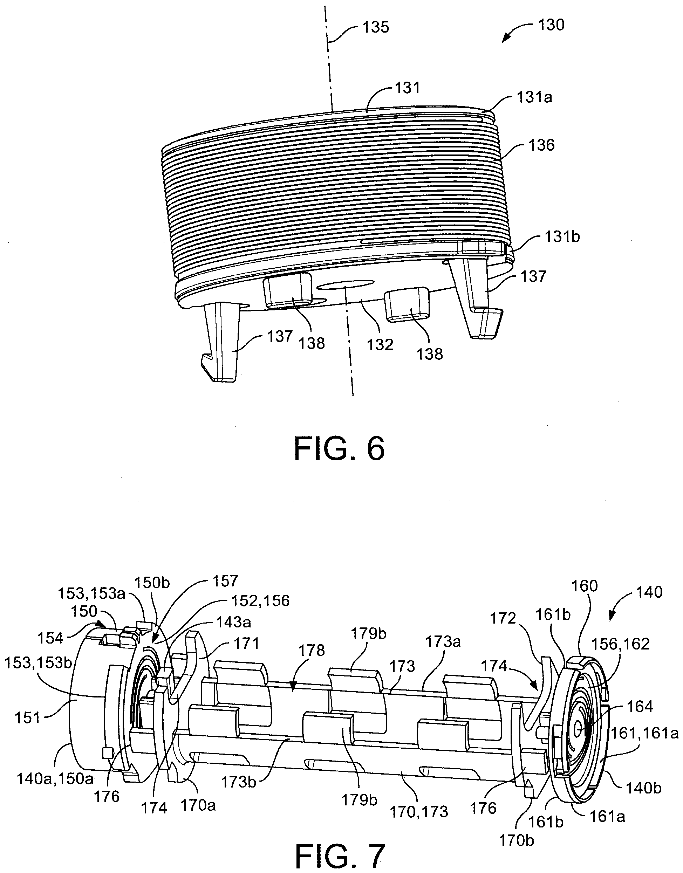

Referring now to Figures 3 and 6, inductive spool assembly 130 is used to inductively charge the battery 190 from the outside of sensor 100 (e.g., wirelessly). In this embodiment, inductive spool assembly 130 includes a cylindrical sleeve-shaped body 131 and a coil 136 wound around body 131. Coil 136 is electrically coupled to circuit board 195 with wires (not shown) that enable the transfer of current to circuit board 195, which in turn charges battery 190 during charging operations.

Body 131 has a central axis 135, a first or upper end 131a, and a second or lower end 131b. As best shown in Figure 3, assembly 130 is disposed within cap 120 with axes 135, 105 coaxially aligned. As shown in Figure 6, upper end 131a is open, while a disc 132 extends across lower end 131b. Disc 132 is generally oriented perpendicular to axis 135 and includes a central throughbore 133. The radially outer surface of body 131 includes an annular recess 134 extending axially between ends 131a, 131b. Coil 136 is seated in recess 134 with the turns of coil 136 axially adjacent one another. A pair of circumferentially-spaced latches 137 and a pair of circumferentially-spaced guides 138 extend axially downward from lower end 131b. Latches 137 releasably secure spool assembly 130 to carrier 140 such that assembly 130 cannot move rotationally or translationally relative to carrier 140, and guides 138 slidingly engage an inner surface of carrier 140 to facilitate the coaxial alignment of body 131 and carrier 140 during installation of assembly 130. In this embodiment, guides 138 are uniformly circumferentially-spaced 180° apart, and latches 137 are uniformly circumferentially-spaced 180° apart, with one guide 138 disposed between each pair of circumferentially-adjacent latches 137.

Referring now to Figures 3, 7, and 8, carrier 140 releasably supports sensor element 180, battery 190, and circuit board 195 within body 111 of outer housing 110, and operates on sensor element 180 in response to vibrations induced by seismic waves. In this embodiment, carrier 140 has a central or longitudinal axis 145, a first or upper end 140a proximal upper end 111a of body 111, and a second or lower end 140b seated against shoulder 117 of body 110. As best shown in Figure 3, carrier 140 is disposed within body 110 with axes 145, 105 coaxially aligned.

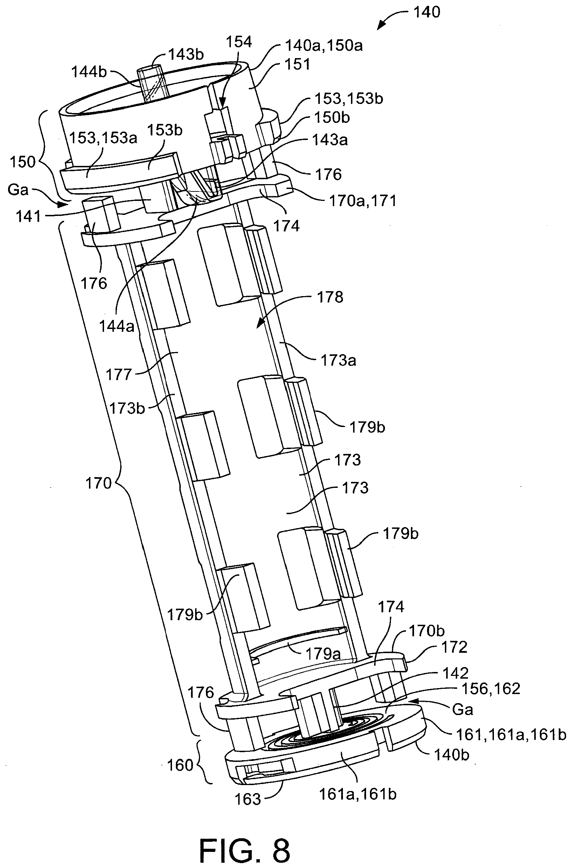

Referring now to Figures 7 and 8, in this embodiment, carrier 140 includes an upper connection member 150 at upper end 140a, a lower connection member 160 at lower end 140b, and a battery holder 170 axially positioned between members 150, 160. An elongate upper post 141 couples upper connection member 150 to battery holder 170 and an elongate lower post 142 couples lower connection member 160 to battery holder 170. Thus, post 141 is axially positioned between battery holder 170 and upper connection member 150, and post 142 is axially positioned between battery holder 170 and lower connection member 160. In this embodiment, connection members 150, 160, holder 170, and posts 141, 142 are concentrically disposed and coaxially aligned with housing 101. In addition, in this embodiment, connection members 150, 160, holder 170, and posts 141, 142 are monolithically formed as a unitary piece. In particular, in this embodiment, the entire carrier 140 is made as one monolithic piece by injection molding into a single piece of clear polycarbonate.

Upper connection member 150 has a first or upper end 150a defining upper end 140a of carrier 140 and a second or lower end 150b opposite end 150a. In addition, upper connection member 150 includes an annular body 151 extending axially between ends 150a, 150b, a flexure or biasing member 152 mounted to body 151 at lower end 150b, and a generally annular mounting flange 153 extending radially outward from body 151 at lower end 150b. A pair of uniformly circumferentially-spaced through holes 154 extend radially through body 151. Guides 138 of inductive spool assembly 130 are arranged (e.g., sized and positioned) to slidingly engage the inner surface of sleeve 151 at upper end 150a, while latches 137 releasably engage holes 154, thereby aligning and connecting assembly 130 and connection member 150.

Referring again to Figures 7 and 8, mounting flange 153 extends radially outward from body 151. In this embodiment, flange 153 is not a continuous annular flange, but rather, includes a plurality of circumferentially extending segments 153a. Each segment 153a has a radially outer cylindrical surface 153b disposed at substantially the same radius as the inner surface of sleeve 112 of body 110. In particular, cylindrical surfaces 153b of segments 153a are fixably secured to sleeve 112 proximal upper end 110a as shown in Figure 3. In general, segments 153a can be secured to sleeve 112 by any suitable means known in the art including, without limitation, adhesive, interference fit, welded connection, etc. In this embodiment, upper connection member 150 and housing 110 are made of polycarbonate, and thus, segments 153a are ultrasonically welded to sleeve 112 along surfaces 153b.

Seismic sensor 100 may be provided with an electromagnetic shield. Electromagnetic shields are known in the art and can shield the components of the sensor from radio frequency signals outside the sensor which might otherwise interfere with operation of the components.

Referring now to Figures 3, 5, and 7, biasing member 152 is a resilient, flexible element that flexes and elastically deforms in response to relative movement of outer housing 101 relative to battery holder 170 and the components mounted thereto (e.g., battery 190 and circuit board 195). In this embodiment, biasing member 152 comprises an annular disc or flange 156 including a plurality of uniformly circumferentially-spaced through cuts or slots 157. Each slot 157 extends axially through disc 156. In addition, each slot 157 spirals radially outward moving from a radially inner end proximal the center of disc 156 and a radially outer end proximal body 151. In this embodiment, three slots 157 are provided, each pair of circumferentially adjacent inner ends of slots 157 are angularly spaced 120° apart about axis 145, each pair of circumferentially adjacent outer ends of slots 157 are angularly spaced 120° apart about axis 145, and each slot 157 extends along a spiral angle measured about axis 145 between its ends of about 180°. As used herein, the term "spiral angle" refers to the angle measured about an axis between the terminal ends of an object (e.g., angle measured about axis 145 between the ends of a slot 157). The radially inner ends of slots 157 are radially spaced from the center of disc 156 and axis 145. As a result, a central portion of disc 156 provides a solid region on disc 156 to which the upper end of post 141 is fixably secured.

Biasing member 152 radially biases battery holder 170 and the components mounted thereto to a central or concentric position radially spaced from housing 101 but does not substantially support or take up the weight of the battery holder 170 and the components mounted thereto. Thus, biasing member 152 yields to the weight of the battery holder 170 and components mounted thereto.. In particular, disc 156 is a semi-rigid structure that generally resists flexing and bending. However, the presence of spiral slots 157 enhances the flexibility of disc 156 in the region along which slots 157 are disposed (e.g., the region radially positioned between post 141 and segments 153a), thereby allowing that region to flex in the axial direction (up and down) with relative ease. Spiral slots 157 also enhance the flexibility of disc 156 in the radial direction. However, spiral slots 157 do not allow disc 156 to flex as easily in the radial direction. Due to the relatively high degree of flexibility of biasing member 152 in the axial direction, when an axial load is applied to biasing member 152 by post 141, slots 157 generally allow the central portion of disc 156 to freely move axially up and down relative to segments 153a. However, due to the more limited flexibility in the radial direction, when a radial load is applied to biasing member 152 by post 141, slots 157 generally resist the central portion of disc 156 from moving radially relative to segments 153a, and to the limited extent the central portion of disc 156 does move radially, disc 156 biases the central portion and post 141 back into coaxial alignment with axes 105, 145.

As best shown in Figures 3 and 8, in this embodiment, an elongate curved L-shaped light guide 143 is coupled to upper connection member 150. Light guide 143 has a first end 143a proximal circuit board 195, a second end 143b proximal lower end 127b of light guide 127, a first or horizontal portion 144a extending radially from end 143a, a second or vertical portion 144b extending axially from end 143b, and a 90° curve or bend extending between portions 144a, 144b. Vertical portion 144b extends through the center of disc 156 of biasing member 152 and throughbore 133 of spool assembly 130, and is coaxially aligned with light guide 127 and housing 101. Similar to light guide 127, to facilitate the transmission of light, guide 143 is made of a clear/transparent material such as clear polycarbonate. As will be described in more detail below, light guides 127, 143 form the light guide assembly that wirelessly communicates data to/from circuit board 195 through top 121. A gap Gg is axially positioned between ends 127b, 143b to allow relative axial movement between light guides 127, 143. Gap Gg has a height measured axially between ends 127b, 143b that is preferably minimized to reduce the loss of light transmitted between light guides 127, 143 across gap Gg, while allowing sufficient relative axial movement between light guides 127, 143 as will be described in more detail below. In this embodiment, relative axial movement of the light guides 127, 143 is about 10.0 microns, and thus, gap Gg is preferably at least 10 microns.

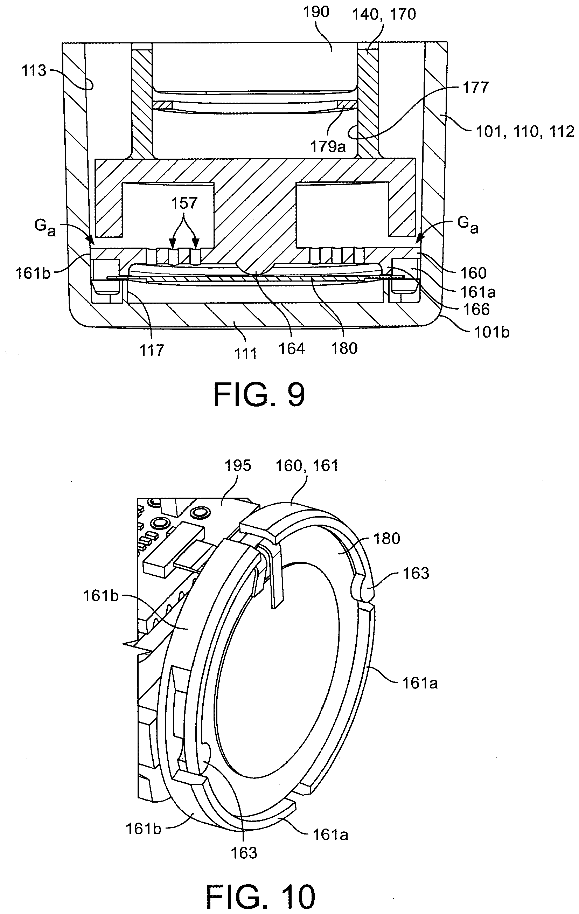

Referring now to Figures 3 and 7-10, lower connection member 160 includes an annular mounting flange 161 and a flexure or biasing member 162 mounted to flange 156. In this embodiment, flange 161 is not a continuous annular flange, but rather, includes a plurality of circumferentially extending segments 161a. Each segment 161a has a radially outer cylindrical surface 161b disposed at substantially the same radius as the inner surface of sleeve 112 of body 110. In particular, cylindrical surfaces 161b of segments 161a are fixably secured to sleeve 112 proximal lower end 110b as shown in Figure 9. In general, segments 161a can be secured to sleeve 112 by any suitable means known in the art including, without limitation, adhesive, interference fit, welded connection, etc. In this embodiment, lower connection member 160 and housing 110 are made of polycarbonate, and thus, segments 161a are ultrasonically welded to sleeve 112 along surfaces 161b. As best shown in Figures 8 and 10, flange 161 includes a pair of circumferentially-spaced resilient fingers 163 that can be flexed radially outward to position sensor element 180 within flange 156 and then allowed to spring radially inward to hold sensor element 180 in the desired position within flange 161.

Referring now to Figures 7-9, biasing member 162 is similar to biasing member 152 previously described. In particular, biasing member 162 is a resilient element that flexes and elastically deforms in response to relative movement of outer housing 101 relative to battery holder 170 and the components mounted thereto (e.g., battery 190 and circuit board 195). In addition, biasing member 162 comprises an annular disc or flange 156 as previously described. The lower end of post 142 is fixably secured to the solid central region of disc 156 of biasing member 162. However, in this embodiment, biasing member 162 includes a semispherical deflection inducer or button 164 and an annular support ridge or lip 166 extending axially from the bottom of disc 156. Button 164 is centered on disc 156, and lip 166 is coaxially aligned with disc 156. In addition, lip 166 is radially positioned between slots 157 and mounting flange 161. Button 164 and lip 166 extend the same distance measured axially from the bottom of disc 156.

Referring now to Figures 9 and 10, sensor element 180 is a flat disc seated within mounting flange 161 against button 164 and lip 166 - the tip of button 164 engages the center of the upper surface of sensor element 180 and lip 166 engages the radially outer periphery of the upper surface of sensor element 180. Fingers 163 hold sensor element 180 within flange 161 against button 164 and lip 166. As best shown in Figure 9, shoulder 117 of body 110 is disposed at the same radius as lip 166 and engages the radially outer periphery of the lower surface of sensor element 180 axially opposite lip 166. Thus, the outer periphery of sensor element 180 is compressed and fixed in position between shoulder 117 and lip 166.

In the same manner as biasing member 152 previously described, biasing member 162 radially biases battery holder 170 and the components mounted thereto to a central or concentric position radially spaced from housing 101, but does not substantially support or take up the weight of the battery holder 170 and the components mounted thereto. Thus, biasing member 162 yields to the weight of the battery holder 170 and components mounted thereto. Due to the relatively high degree of flexibility of biasing member 162 in the axial direction, when an axial load is applied to biasing member 162 by post 142, slots 157 generally allow the central portion of disc 156 to freely move axially up and down relative to segments 153a. However, due to the more limited flexibility in the radial direction, when a radial load is applied to biasing member 162 by post 142, slots 157 generally resist the central portion of disc 156 from moving radially relative to segments 161a, and to the limited extent the central portion of disc 156 does move radially, disc 156 biases the central portion and post 142 back into coaxial alignment with axes 105, 145.

Annular flanges 153, 161 are fixably secured to outer housing 101 and posts 141, 142 coupled battery holder 170 to biasing members 152, 162, respectively. Thus, weight of battery holder 170 and the components mounted thereto cause biasing members 152, 162 to flex and yield in the axial direction, thereby bringing the tip of button 164 into contact with the center of sensor element 180 and transferring substantially all of the weight of battery holder 170 and the components mounted thereto to the center of sensor element 180 (via button 164).

As best shown in Figure 9, the tip of button 164 contacts the center of sensor element 180 and transfers the weight of battery holder 170 and the components mounted thereto to sensor element 180 with outer housing 101 and battery holder 170 at rest (e.g., no relative movement between outer housing 101 and battery holder 170). The outer periphery of sensor element 180 is restrained between lip 166 and shoulder 117, and thus, when button 164 bears against the sensor element 180 under the weight of battery holder 170 and the components mounted thereto, the outer periphery of sensor element 180 is static relative to housing 101.

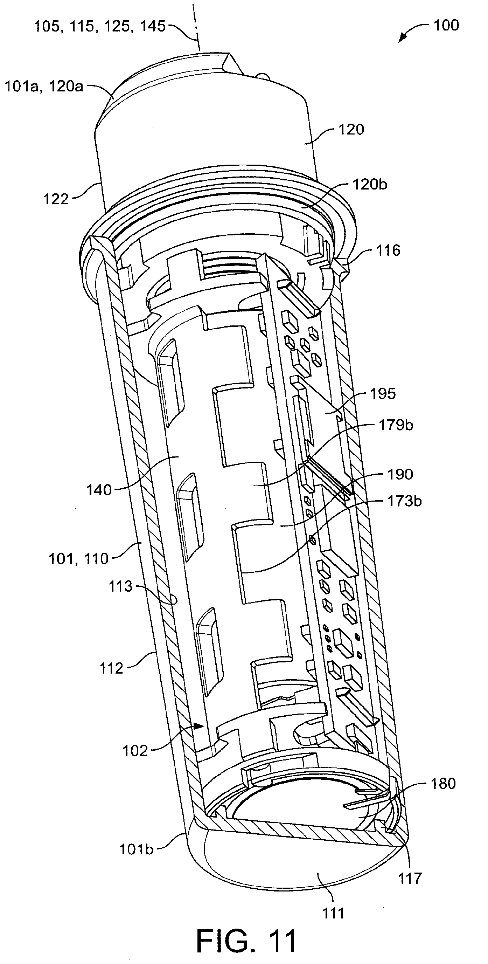

Referring again to Figures 7 and 8, battery holder 170 has a first or upper end 170a and a second or lower end 170b. In addition, battery holder 170 includes a first or upper wall 171 disposed at upper end 170a, a second or lower wall 172 disposed at lower end 170b, and a semi-cylindrical body 173 extending axially between walls 171, 172. Each wall 171, 172 is an annular plate or disc including a rectangular recess 174 extending radially inward from the radially outer edge of the disc. Recesses 174 of walls 171, 172 are circumferentially aligned and sized to receive circuit board 195 therein as shown in Figure 11. As best shown in Figure 3, each wall 171, 172 has an outer radius that is less than the inner radius of outer housing 101. Thus, a gap Gr is radially positioned between each wall 171, 172 and housing 101. Each gap Gr has a width measured radially between the wall 171, 172 and outer housing 101. In embodiments described herein, the radial width of each gap Gr is preferably greater than 0.0 mm (e.g., non-zero) and less than 2.0 mm, and more preferably greater than 0.0 mm and less than 1.0 mm, with battery holder 170 concentrically disposed in outer housing 101. The gap Gr allows outer housing 101 to move radially and laterally relative to battery holder 170 as discs 156 of biasing members 152, 162 flex, but limits the maximum such radial and lateral movement. Thus, walls 171, 172 function as radial motion limiters or stops - battery holder 180 can move radially within housing 101 until wall 171, 172 radially contacts housing 101.

Referring again to Figures 7 and 8, a pair of uniformly circumferentially-spaced posts 176 extend axially from the radially outer periphery of each wall 171, 172. Posts 176 of upper wall 171 extends axially upward toward biasing member 152 and posts 176 of wall 172 extend axially downward toward biasing member 162. However, the terminal ends of posts 176 are axially spaced from the axially adjacent biasing members 152, 162. Thus, a gap Ga is axially positioned between the terminal end of each post 176 and the axially adjacent biasing member 152, 162. Each gap Ga has a height measured axially between the terminal end of each post 176 and the axially adjacent biasing member 152, 162. In embodiments described herein, the axial height of each gap Ga is preferably about 10.0 microns, with battery holder 170 in the neutral position in outer housing 101. As will be described in more detail below, gap Ga allows outer housing 101 to move axially relative to battery holder 170 as discs 156 of biasing members 152, 162 flex, but limits the maximum relative axial movement to a distance corresponding to the size of gap Ga. Thus, posts 176 function as axial motion limiters or stops - outer housing 101 can move axially downward relative to battery holder 170 until biasing member 152 contact posts 176 extending from upper wall 171, and outer housing 101 can move axially upward relative to battery holder 170 until biasing member 162 contacts posts 176 extending from lower wall 172. The minimum axial height of gap Gg between ends 127b, 143b of guides 127, 143, respectively, is greater than zero when posts 176 extending from wall 171 axially abut biasing member 152, thereby preventing ends 127b, 143b from contacting each other.

Referring now to Figures 7, 8, and 11, body 173 has lateral sides 173a, 173b extending axially between walls 171, 172 and a semi-cylindrical radially inner surface 177 extending circumferentially between sides 173a, 173b. Surface 177 defines a receptacle 178 sized and shaped to removably receive battery 190. The opening of receptacle 178 radially opposite surface 177 is circumferentially aligned with rectangular recesses 174 of walls 171, 172. A shoulder 179a is disposed along and extends radially inward from surface 177. Shoulder 179a is axially positioned proximal wall 172 and extends circumferentially between sides 173a, 173b. A plurality of axially spaced tabs 179b are provided along each side 173a, 173b. Tabs 179b extend circumferentially from sides 173a, 173b. As best shown in Figure 11, battery 190 is seated in receptacle 178 against surface 177 and axially positioned between wall 171 and shoulder 179a, which restrict and/or prevent the axial movement of battery 190 relative to holder 170. To accommodate thermal expansion of battery 190 and account for tolerances (e.g., the tolerance on the length of battery 190), the axial distance between wall 171 and shoulder 179a is preferably greater than the length of battery 190 and no more than 2.0 mm greater than the length of battery 190, and more preferably no more than 1.0 mm greater than the length of batter 190, and still more preferably about 0.5 mm greater than the length of batter 190. Tabs 179b extend circumferentially around battery 190, thereby retaining battery 190 within receptacle 178. Tabs 179b are resilient members that can be flexed radially outward to pass battery 190 therebetween during insertion or removal of battery 190 from receptacle 178.

Referring now to Figures 7-11, as previously described, sensor element 180 is a flat disc disposed within flange 161 with button 164 and lip 166 contacting the upper surface of element 180 and shoulder 117 and fingers 163 contacting the lower surface of element 180. The radially outer periphery of element 180 is generally held stationary relative to outer housing 101, however, the central portion of element 180 bears the weight of battery holder 170 and the components mounted thereto, and further, can be deflected by button 164. In this embodiment, sensor element 180 is made of a metallic disc (e.g., brass) having one or more layers of a piezoelectric ceramic material (e.g., lead zirconate titanate (PZT)) disposed thereon. When mechanical stress is applied to sensor element 180 due to deformation or deflection, the piezoelectric ceramic material generates an electrical potential (piezoelectric effect). Sensor element 180 is electrically coupled to circuit board 195 with wires such that the electrical potential generated by the piezoelectric ceramic material is detected and measured by electronics housed on circuit board 195 and stored in memory on circuit board 195.

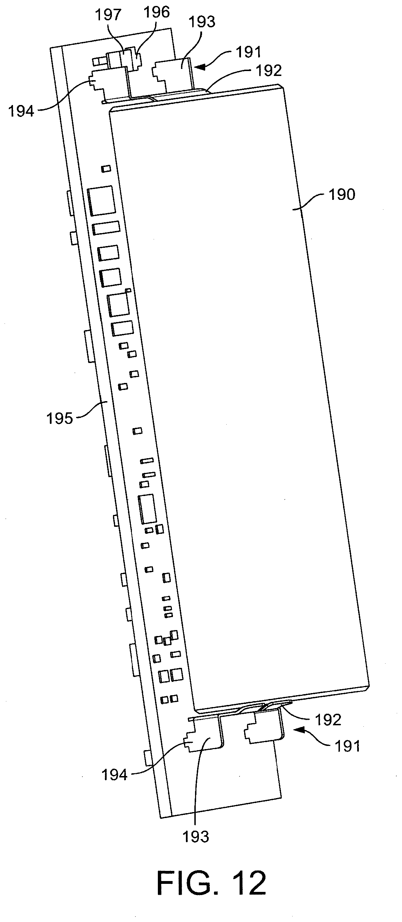

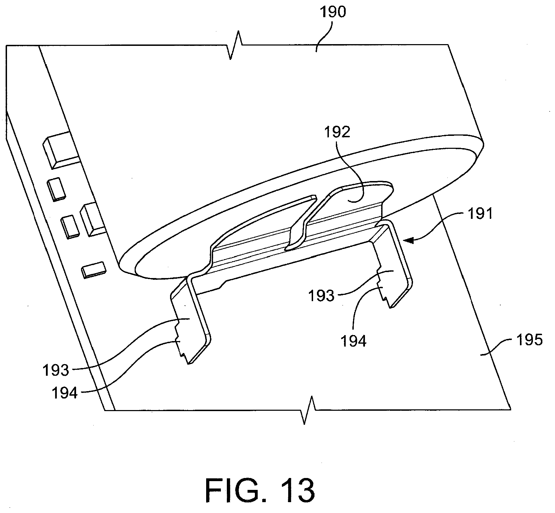

Referring now to Figure 12 and 13, battery 190 has a cylindrical shape and is coupled to circuit board 195 with a pair of tabs 191. In particular, tabs 191 are disposed at the ends of battery 190 and are welded to battery 190. Tabs 191 are made of metal (e.g., nickel plated stainless steel or nickel plated steel), and provide both a physical and electrical connection between battery 190 and circuit board 195. Thus, tabs 191 enable battery 190 to provide power to circuit board 195 and the various functions performed by the components of board 195 during seismic survey operations, and enable board 195 to provide power to battery 190 during inductive charging operations.

In this embodiment, each tab 191 is the same. More specifically, each tab 191 is formed from relatively thin sheet metal. The sheet is stamped and then bent such that each tab 191 includes a generally planar base 192, a pair of supports 193 extending perpendicularly from the lateral sides of base 192, and a prong 194 extending from each support 193. Each base 192 is positioned flush against the corresponding end of battery 190 and soldered thereto. Prongs 194 of each tab 191 extend through circuit board 195 and are soldered thereto.

Referring now to Figures 3 and 11, battery 190 and circuit board 195 are fixably coupled with tabs 191, and then that assembly is releasably coupled to battery holder 170 by seating battery 190 in receptacle 178 as previously described with board 195 circumferentially aligned with recesses 174. Thus, when battery 190 is disposed in receptacle 178, the ends of board 195 are disposed in recesses 174. Positioning circuit board 195 within recesses 174 spaces board 195 away from housing 101, thereby reducing the potential for circuit board to inadvertently contact or rub against housing 101. In addition, the lateral sides of recesses 174 prevent circuit board 195 and battery 190 coupled thereto from rotating relative to carrier 140.

In this embodiment, battery 190 is coaxially aligned with carrier 140 and housing 101. As will be described in more detail below, during seismic survey operations, outer housing 101 and connection members 150, 160 axially reciprocate relative to battery 190, circuit board 195, and battery holder 170 in response to vibrations induced by seismic waves. Thus, in this embodiment, battery 190, board 195, and battery holder 170 collectively define the proof mass of sensor 100. Tabs 191 are designed and configured to provide sufficient rigidity and strength to prevent battery 190 and circuit board 195 from moving axially relative to each. In particular, bases 192 are generally oriented perpendicular to axes 105, 145. Since bases 192 are relatively thin in the axial direction, they may be prone to flexing in the axial direction. However, supports 193 are oriented perpendicular to the corresponding base 192 (e.g., parallel to axes 105, 145), and thus, enhance the rigidity and strength to bases 192 in the axial direction, thereby limiting and/or preventing bases 192 from flexing.

Circuit board 195 includes the electronic circuitry of sensor 100. The electronic circuitry is coupled to sensor element 180 and is arranged to process the output of sensor element 180, for example by amplifying, digitally sampling, transmitting and/or storing the output of sensor element 180. In addition, an LED 196 and a photodiode 197 are mounted to circuit boards 195 and coupled to the electronic circuitry. LED 196 and photodiode 197 are positioned adjacent each other on the face of circuit board 195 immediately adjacent end 143a of light guide 143. Together, top 121, light guides 127, 143, LED 196, and photodiode 197 enable the bidirectional communication of data to/from circuit board 195. In particular, a device outside sensor 100 can wirelessly communicate with circuit board 195 via the transmission of light from the external device through top 121 and guide 127 to end 127b, across gap Gg from end 127b to end 143b, through guide 143 to end 143a, and across the gap between end 143a and photodiode 197 to photodiode 197; and circuit board 195 can wirelessly communicate with the external device via the transmission of light from LED 196 across the gap between LED 196 and end 143a into guide 143, through guide 143 to end 143b, across gap Gg from end 143b to end 127b, and through guide 127 and top 121 to the external device.

During seismic surveys, a plurality of sensors 100 are placed on or in the surface of the earth (e.g., in place of sensors 64, 66, 68 in system 50). Each sensor 100 may, for example, be attached to a spike which is pushed into the earth. Alternatively, the entire sensor 100 may be buried, or placed at depth in a borehole. Regardless of how sensors 100 are coupled to the earth, each sensor 100 is preferably positioned with axis 105 oriented in a generally vertical direction. Biasing members 152, 162 flex under the weight of the proof mass (e.g., the weight of the assembly of battery 190, board 195, and battery holder 170), thereby transferring the weight of the proof mass to sensor element 180 via button 164.

The arrival of a compressional seismic wave causes outer housing 101 and the components fixably coupled thereto (e.g., spool assembly 130, body 151 and mounting flange 153 of upper connection member 150, and mounting flange 161 of lower connection member 160) to move and reciprocate in a generally vertical direction. The inertia of the proof mass within outer housing 101 (e.g., the assembly of battery 190, board 195, and battery holder 170) causes the proof mass to resist moving with the displacement of the outer housing 101, and consequently there is axial movement of the outer housing 101 relative to the proof mass, as permitted by biasing members 152, 162, walls 171, 172, and posts 176. This movement causes biasing members 152, 162 to flex or be deflected. Button 164 bears against sensor element 180 with sensor 100 at rest and during receipt of seismic waves. Thus, the deflection of biasing members 152, 162 varies the load applied to sensing element 180 by button 164. The axial reciprocation of the outer housing 101 relative to the proof mass generally continues as the compressional seismic wave passes across sensor 100.

During the axial reciprocations of the outer housing 101 relative to the proof mass, the sensor element 180 is cyclically deflected by button 164. As previously described, when mechanical stress is applied to sensor element 180 due to deformation or deflection by button 164, the piezoelectric ceramic material generates an electrical potential (piezoelectric effect). The electrical potential is connected to circuit board 195 via wires, where it is detected, and may be sampled and stored in memory as a measure of the amplitude of the seismic vibration. The data stored in memory on the circuit board 195 can be communicated to an external device for further consideration and analysis via LED 196, light guides 127, 143, and top 121 as previously described.

As previously described, circuit board 195 forms part of the proof mass that outer housing 101 moves axially relative to during seismic surveying. Thus, outer housing 101 moves axially relative to LED 196 and photodiode 197 of circuit board 195. The two-part light guide assembly including light guides 127, 143 allows for bi-directional communications to/from circuit board 195 despite the relative axial movement of the outer housing 101 relative to the proof mass, associated LED 196, and photodiode 197. In particular, gap Gg allows light guides 127, 143 to move axially relative to each other as light guide 127 moves axially with outer housing 101 and light guide 143 moves axially with post 141. Thus, end 143a remains aligned with LED 196 and photodiode 197 during relative axial movement of outer housing 101 relative to the proof mass. The coaxial alignment of guide 127, portion 144b of guide 143, and outer housing 101 (including cap 120) ensures alignment of ends 127b, 141b and enables the transmission of light through guides 127, 143 despite the relative axial movement. In addition, the coaxial alignment of guide 127 and portion 144b of guide 143 with the center of cap 120 enables the transmission of light through guides 127, 143 and cap 120 regardless of the rotational orientation of cap 120 relative to carrier 140. It should also be appreciated that the L-shape of light guide 143 enables the transfer of light to/from photodiode 197 and LED 196, respectively, which generally face in a radial direction (generally face toward axis 105) while ensuring the coaxial and centered alignment of cap 120, guide 127, and portion 144b. In embodiments described herein, the light guide assemblies rely on the transmission of light via total internal reflection (TIR) as is known in the art. Without being limited by this or any particular theory, for light guide assemblies described herein that are made of clear polycarbonate, light incident on an internal wall of the light guide assembly at an angle less than about 43° is internally reflected. However, it should be appreciated that the incident angle resulting in internal reflection may depend on a variety of factors including the material of the light guide assembly.

As previously described, biasing members 152, 162 allow generally free relative axial movement of the proof mass relative to the outer housing 101. In the resting position, button 164 engages sensor element 180, and further, sensor element 180 supports the majority or substantially all of the weight of the battery 190. Consequently, sensor element 180 is subjected to stress with the proof mass in the resting position. The axial reciprocation of the outer housing 101 relative to the proof mass subjects sensor element 180 to increasing and decreasing degrees of stress. The variations in the stress experienced by the sensor element 180 is used to detect and measure the seismic waves. However, it should be appreciated that the ceramic material of the sensor element 180 may be damaged by excessive stress. Accordingly, the maximum axial movement of outer housing 101 relative to the proof mass is limited to protect the sensor element 180 and prevent it from being overly stress. In the embodiment of sensor 100 shown and described above, the maximum axial movement of the outer housing 101 relative to the proof mass is controlled and limited by posts 176 as previously described. In addition, as previously described, biasing members 152, 162 bias the proof mass to the centered position coaxially aligned with outer housing 101. As a result, the proof mass is radially spaced from outer housing 101 and is generally restrained from moving radially relative to the outer housing 101. Consequently, the movement of outer housing 101 relative to the proof mass is predominately in the axial direction, and further, the proof mass does not inhibit or interfere with the axial movement of outer housing 101. It should be appreciated that the gaps Gr also limit the relative radial movement between outer housing 101 and the proof mass to ensure predominantly axial motion.

Although slots 157 having spiral geometries are employed to enhance the flexibility of disc 156 and biasing member 152, 162 in the axial direction in this embodiment of sensor 100, in other embodiments, different approaches can be used to enhance the flexibility of the disc. For example, slots having different geometries can be employed (e.g., radially extending slots as opposed to spiral slots). As another example, the disc of each biasing member (e.g., disc 156 of each biasing member 152, 162) includes radially extending spokes or bridges extending between an outer periphery of the disc and the central portion of the disc, thereby creating a plurality of circumferentially-spaced pie shaped slots in the disc between each pair of adjacent spokes. As yet another example, different materials can be used to form the disc, or the thickness or geometry of the disc can be varied (e.g., thinner disc), etc. As used herein, term "slot" may generally be used to refer to a cut or hole, and thus, should not be interpreted to refer to a specific geometry of cut or hole unless expressly stated.

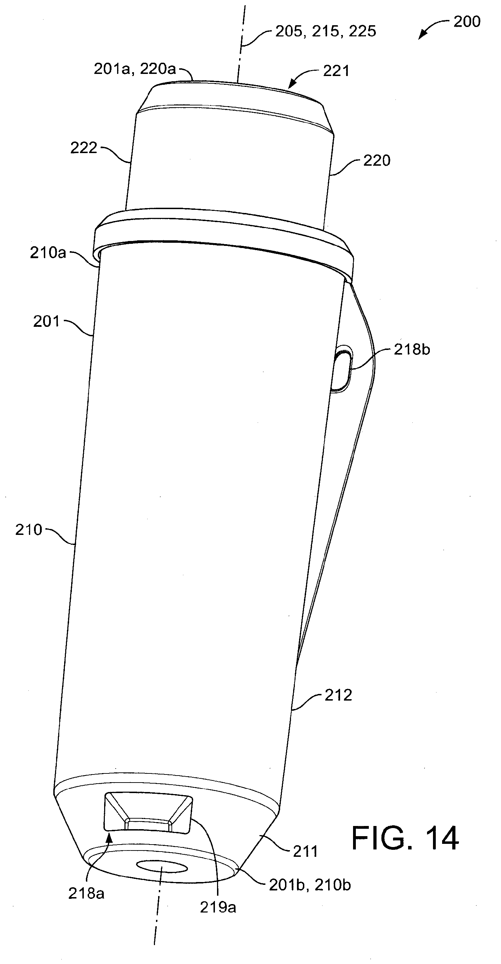

A second embodiment of a seismic sensor 200 will now be described in connection with Figures 14-21. In the second embodiment, the electrical connections between the battery and the electronic circuitry are resilient and function similarly to biasing members 152, 162 previously described. In general, seismic sensor 200 can be used in any seismic survey system. For example, sensor 200 can be used for any one or more of sensors 64, 66, 68 of seismic surveying system 50 shown in Figure 1 and described above. Although sensor 200 can be used in a land seismic survey system, a transition zone seismic survey system, or marine seismic survey system, it is particularly suited to land-based seismic surveys and transition zone seismic survey systems.

Referring now to Figures 14-16, in this embodiment, seismic sensor 200 includes an outer housing 201, an inductive spool assembly 230 disposed within housing 201, a carrier 240 disposed in housing 201, and a sensor element 180 disposed within housing 201 and coupled to carrier 240. Electronic circuitry 195 is fixably mounted to carrier 240 within housing 201, however, battery 190 is configured to move axially relative to housing 201, carrier 240, and circuitry 195. Sensor element 180, battery 190, and circuitry 195 of sensor 200 are the same as previously described with respect to sensor 100. Thus, electronic circuitry 195 is in the form of a circuit board (e.g., PCB).

Housing 201 is substantially the same as housing 101 previously described. In particular, housing 201 has a central or longitudinal axis 205, a first or upper end 201a, a second or lower end 201b, and an inner chamber or cavity 202. Ends 201a, 201b are closed and inner cavity 202 is sealed and isolated from the surrounding environment outside sensor 200, thereby protecting the sensitive components disposed within housing 201 from the environment (e.g., water, dirt, etc.). In addition, housing 201 includes a generally cup-shaped body 210 and an inverted cup-shaped cap 220 fixably attached to body 210.

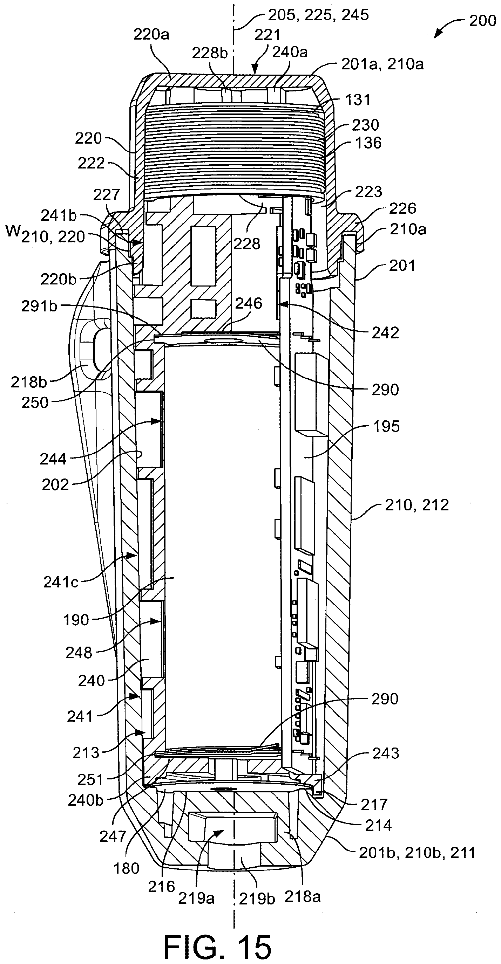

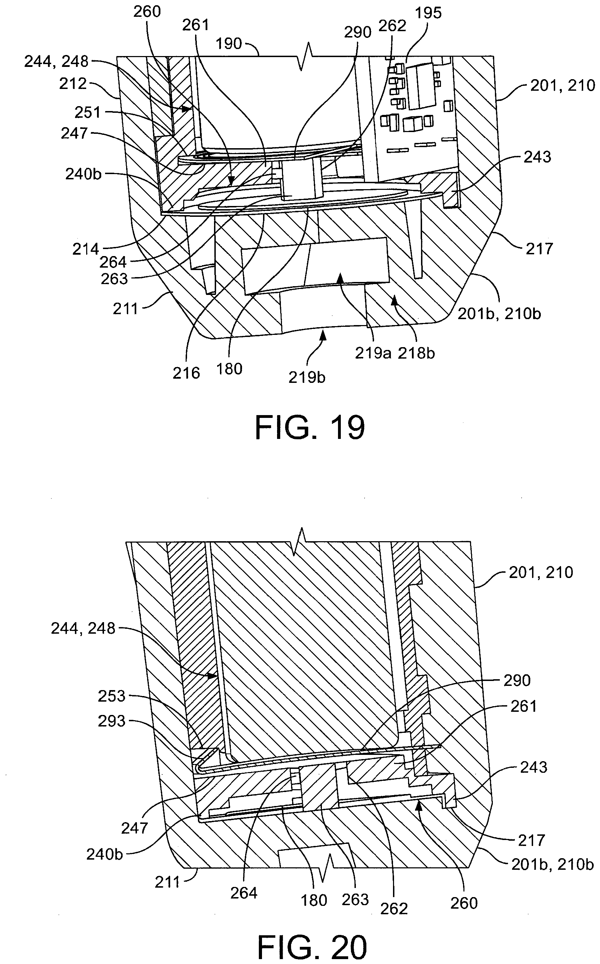

Body 210 has a central or longitudinal axis 215 coaxially aligned with axis 205, a first or upper end 210a, and a second or lower end 210b defining lower end 201b of housing 201. In addition, body 210 includes a base 211 at lower end 210b and a tubular sleeve 212 extending axially upward from base 211 to upper end 110a. Base 211 closes sleeve 212 at lower end 210b, however, sleeve 212 and body 210 are open at upper end 210a. As a result, body 210 includes a receptacle 213 extending axially from upper end 210a to base 211. Receptacle 213 forms part of inner cavity 202 of housing 201. As best shown in Figures 15 and 19, at the lower end of receptacle 213 axially adjacent base 211, body 210 includes an annular upward-facing planar shoulder 214 radially adjacent sleeve 212 and an upward-facing circular planar surface 216 concentrically positioned within shoulder 214. A recess 217 is provided along a portion of shoulder 214. As will be described in more detail below, open upper end 210a is closed with cap 220.

In this embodiment, body 210 of outer housing 201 includes a pair of connectors 218a, 218b. Connector 218a is provided on base 211 and connector 218b is provided along sleeve 212. Connector 218a includes rectangular throughbore 219a extending radially therethrough and a hole 219b extending axially from lower end 210b to throughbore 219a. Hole 219b is internally threaded and threadably receives the externally threaded end of a spike used to secure sensor 200 to the ground. Throughbore 219a enables a rope or the like to be attached to sensor 200 for storage or deployment. In particular, the rope may be folded double and inserted through bore 219a. Thus, bore 219a has a width of at least twice the diameter of the rope. The loop formed by the portion of folded rope extending through bore 219a is then placed around the sensor 200. In this manner, a plurality of sensors 200 can be coupled to a single rope without side ropes, hooks or other mechanisms that can complicate the handling of multiple sensors.

A connector 218b is disposed along the outside of sleeve 212 proximal upper end 201a. In general, connector 218b provides an alternative means for handling of sensor 200 during deployment and retrieval. In this embodiment, connector 218b is an eye connector or throughbore to which a rope, lanyard, hook, carabiner or the like can be releasably attached. Connector 218b can also be used in a manner similar to throughbore 219a, thereby allowing a rope to be folded double and inserted through the hole of connector 218b. Thus, the bore of connector 218a has a width of at least twice the diameter of the rope. The loop formed by the portion of folded rope extending through the bore of connector 218b is then placed around the sensor 200. In this manner, a plurality of sensors 200 can be coupled to a single rope without side ropes, hooks or other mechanisms that can complicate the handling of multiple sensors. In this embodiment, the entire body 110 (including base 211 and sleeve 212) is made via injection molding.

Referring still to Figures 14-16, cap 220 has a central or longitudinal axis 225 coaxially aligned with axis 205, a first or upper end 220a defining upper end 201a of housing 201, and a second or lower end 220b. In this embodiment, cap 220 has the general shape of an inverted cup. In particular, cap 220 includes a planar cylindrical top 221 at upper end 220a and a tubular sleeve 222 extending axially downward from top 221 to lower end 220b. Top 221 closes sleeve 222 at upper end 220a, however, sleeve 222 and cap 220 are open at lower end 220b. As a result, cap 220 includes an inner chamber or cavity 223 extending axially from lower end 220b to top 221. An annular flange 226 extends radially outward from sleeve 222 proximal lower end 220b. An annular recess 227 is provided along the bottom surface of flange 226.

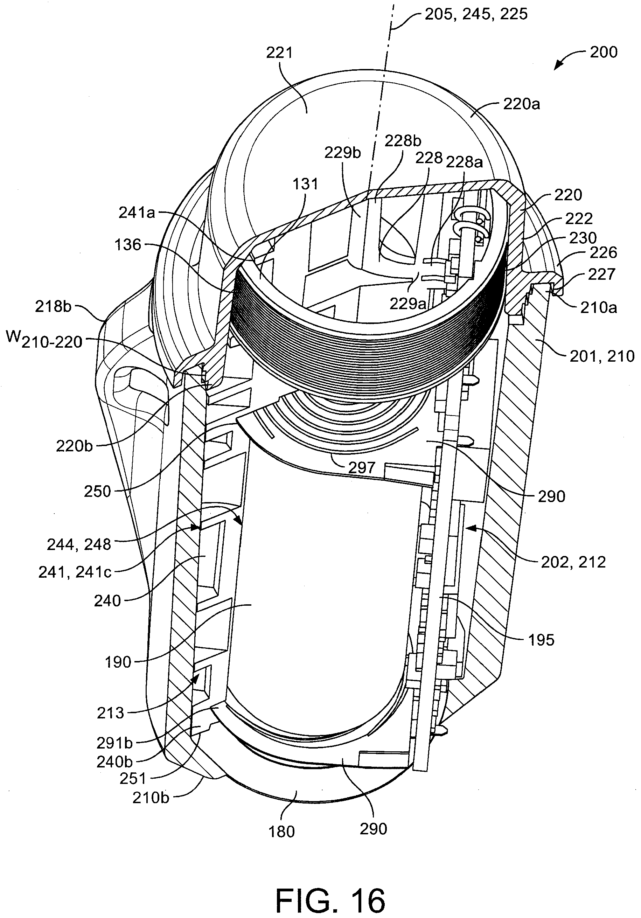

As best shown in Figures 15 and 16, cap 220 is fixably attached to body 210. In particular, cap 220 is coaxially aligned with body 210 with lower end 220b of cap 220 seated within upper end 210a of body 210 and upper end 210a of body 210 seated in annular recess 227 of flange 226. Body 210 and cap 220 are sized such that an interference fit is provided between lower end 220b of cap 220 and upper end 210a of body 210, and an interference fit is provided between upper end 210a of body 210 and recess 227. In this embodiment, body 210 and cap 220 are made of the same material (polycarbonate), and thus, are can be ultrasonically welded together to fixably secure cap 220 to body 210. More specifically, an annular ultrasonic weld W₂₁₀₋₂₂₀ is formed between the opposed radially outer surface and radially inner surface of sleeves 222, 212, respectively, at ends 220b, 210a. Weld W₂₁₀₋₂₂₀ defines an annular seal between cap 220 and body 210 that prevents fluid communication between cavities 213, 223 and the environment surrounding sensor 200.

Referring still to Figures 15 and 16, inductive spool assembly 230 is used to inductively charge the battery 190 from the outside of sensor 100 (e.g., wirelessly). In this embodiment, spool assembly 230 is substantially the same as inductive spool assembly 130 previously described with the exception that spool assembly 230 does not include latches 137 or guides 138. Thus, spool assembly 230 includes annular body 131 and coil 136 wound around body 131. Body 131 is disposed about the upper portion of carrier 240. Coil 136 is electrically coupled to circuit board 195 with wires (not shown) that enable the transfer of current to circuit board 195, which in turn charges battery 190 during charging operations.

In this embodiment, carrier 240 supports circuit board 195 and a light guide 228 within body 211 of outer housing 210, and further, carrier 240 operates on sensor element 180 in response to vibrations induced by seismic waves. However, unlike sensor 100 previously described, in this embodiment, battery 190 is moveably disposed within carrier 240. In particular, carrier 240, circuit board 195, and light guide 228 are fixably coupled to outer housing 201 and do not move relative to outer housing 210, however, battery 190 is movably coupled to carrier 240, and thus, battery 190 can move axially relative to carrier 240, circuit board 195, light guide 228, and outer housing 201.

As best shown in Figures 15 and 16, carrier 240 has a central or longitudinal axis 245 coaxially aligned with axis 205, a first or upper end 240a extending through inductive spool assembly 230, a second or lower end 240b axially adjacent base 211, and a radially outer surface 241 extending axially from upper end 240a to lower end 240b. Outer surface 241 slidingly engages the inside of outer housing 201 between ends 240a, 240b. In particular, outer surface 241 includes a first cylindrical surface 241a proximal upper end 240a, a second cylindrical surface 241b axially adjacent surface 241a, and a third cylindrical surface 241c axially adjacent surface 241b and extending axially from lower end 240b. Thus, cylindrical surface 241b is axially positioned between surfaces 241a, 241c. Surfaces 241a, 241b, 241c are disposed at different radii - surface 241a is disposed at a radius that is less than surface 241b, and surface 241b is disposed at a radius that is less than surface 241c. Thus, upward facing planar annular shoulders extend radially between each pair of axially adjacent surfaces 241a, 241b, 241c. Surface 241a extends through and slidingly engages the cylindrical inner surface of body 131, surface 241b is disposed within and slidingly engages the cylindrical inner surface of cap 220, and surface 241c is disposed within and slidingly engages the cylindrical inner surface of sleeve 212. Radial engagement of these surfaces prevents carrier 240 from moving radially or laterally relative to outer housing 201. In this embodiment, the cylindrical inner surface of sleeve 212 includes a pair of axially extending splines that slidingly engage a corresponding pair of mating axially extending recesses provided on outer surface 241c. Engagement of these mating splines and recesses prevents carrier 240 from rotating about axis 205 relative to outer housing 201.

Although surfaces 241a, 241b, 241c of outer surface 241 are described as being cylindrical, it should be appreciated that outer surface 241 of carrier 240 may include cavities or recesses (e.g., to reduce its weight, to facilitate its manufacture by injection molding, etc.). In addition, outer surface 241 includes a planar surface 242 extending axially from upper end 240a to lower end 240b. Planar surface 242 is oriented parallel to axis 245, is radially offset from axis 245, and provides a face against which circuit board 195 can be mounted. Despite the foregoing, outer surface 241 slidingly engages each of cap 211, sleeve 212, and body 131 over an angular distance of at least 180° measured about axes 205, 245, which prevents carrier 240 from moving radially and laterally relative to outer housing 201.

Carrier 240 has an axial length that is substantially the same as the axial length of cavity 223. Thus, upper end 240a engages top 221 of cap 220 and lower end 240b is seated against sensing disk 180, which in turn is supported by shoulder 214. More specifically, carrier 240 is axially compressed between cap 220 and outer housing 210. As a result, carrier 240 cannot move axially relative to outer housing 201.

Referring still to Figures 15 and 16, carrier 240 includes a recess or pocket 244 that extends radially inward from outer surface 241, and in particular, planar surface 242. Pocket 244 is defined by an upper end surface 246, a lower end surface 247, and a cylindrical surface 248 extending axially between end surfaces 246, 247. Battery 190 is disposed within pocket 244 but does not contact carrier 240. In particular, the dimensions of pocket 244 are greater than the dimensions of battery 190 (e.g., the radius of surface 248 is greater than the outer radius of battery 190, and the axial distance between end surfaces 246, 247 is greater than the length of battery 190). In this embodiment, battery 190 is oriented parallel to axes 205, 245, but is slightly radially offset from axes 205, 245. In particular, the central axis of battery 190 is radially offset from axes 205, 245 by about 1.0 to 1.5 mm.

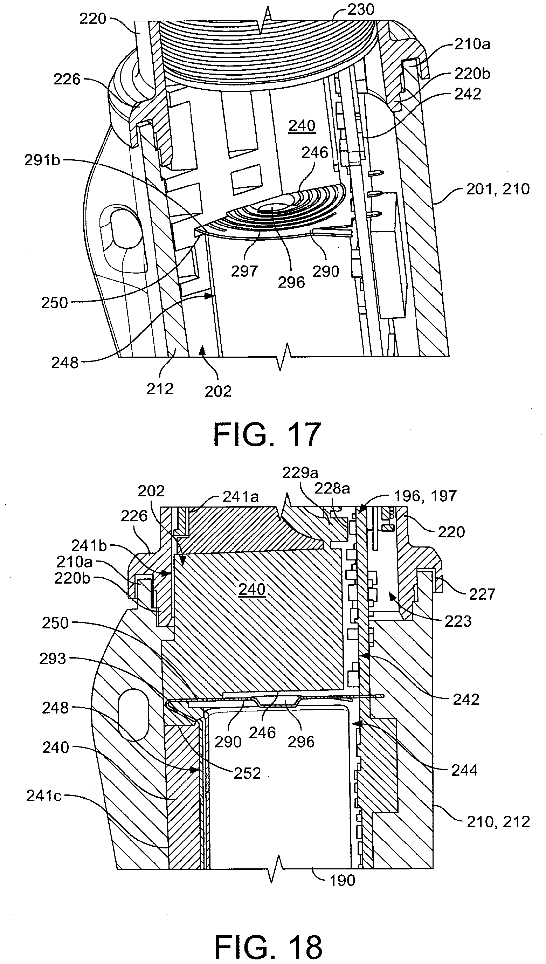

Referring now to Figures 15-20, an annular recess 250 extends radially outward from pocket 244 and into surface 248 proximal upper end surface 246 and an annular recess 251 extends radially outward from pocket 244 and into surface 248 proximal lower end surface 247. As best shown in Figures 18 and 20, a rectangular hole 252 extends radially from recess 250 and surface 248 to outer surface 241c proximal upper end surface 246, and a rectangular hole 253 extends radially from recess 251 and surface 248 to outer surface 241c proximal lower end surface 247. As best shown in Figures 17 and 18, end surface 246 is axially spaced above recess 250 and hole 252, and as best shown in Figures 19 and 20, end surface 247 is axially spaced below recess 251 and hole 253.

Referring now to Figures 16 and 18, elongate curved L-shaped light guide 228 is fixably secured to carrier 240. In this embodiment, light guide 228 is integral with and monolithically formed with carrier 240. Light guide 228 has a first end 228a proximal circuit board 195, a second end 228b engaging or immediately adjacent top 221, a first or horizontal portion 229a extending radially from end 228a, a second or vertical portion 229b extending axially from end 143b, and a substantially 90° curve or bend extending between portions 229a, 229b. Horizontal portion 229a extends through surface 241a and vertical portion 229b extends to upper end 240a. In addition, vertical portion 229b is coaxially aligned with carrier 240 and housing 201. As will be described in more detail below, light guide 228 wirelessly communicates data to/from circuit board 195 through top 221. To facilitate the transmission of light, light guide 228 and top 221 are made of a clear material. In this embodiment, the entire cap 220 (including top 221 and sleeve 222) and guide 228 are made of a clear polycarbonate.

Referring now to Figures 19 and 20, a generally circular recess 260 is provided in lower end 240b of carrier 240. Recess 260 is coaxially aligned with battery 190 and pocket 244, and has a radius slightly less than the radius of carrier 240 at lower end 240b. As a result, lower end 240b of carrier 240 is an annular downward facing planar surface. Recess 260 extends axially from lower end 240b to an annular flange 261 axially positioned between recess 260 and pocket 244. The planar upper surface of flange 261 defines lower end surface 247 of pocket 244, and the planar lower surface of flange 261 defines the upper end of recess 260. A central throughbore 262 extends axially through flange 261 and a cylindrical post 263 is coaxially disposed in throughbore 262. Recess 260, throughbore 262, and post 263 are coaxially aligned with battery 190. A thin arm or blade 264 extends between post 263 and flange 261, thereby maintaining post 263 in position within throughbore 262. As will be described in more detail below, post 263 can freely move axially within throughbore 262 as outer housing 201 and carrier 240 axially reciprocate. The thin arm extending between post 263 and flange 261 does not inhibit the axial movement of outer housing 201 and carrier 240 relative to post 263. Although post 263 is coupled to flange 261 with a thin arm or blade in this embodiment, in other embodiments, the post (e.g., post 263) is not coupled to the flange and instead, is attached to a battery tab (e.g., tab 290 described in more detail below) or sensor element 180.

Referring now to Figures 16, 19, and 20, sensor element 180 is a flat disc axially positioned between lower end 240b and shoulder 214. End 240b and shoulder 214 are disposed at the same radius and engage the radially outer periphery of the upper and lower surfaces of element 180, respectively. In addition, post 263 engages the center of the upper surface of sensor element 180. Thus, the outer periphery of sensor element 180 is compressed and fixed in position between end 240b and shoulder 214. Thus, the radially outer periphery of element 180 is generally held static relative to housing 201 and carrier 240, however, the central portion of element 180 can be deflected with post 263. Planar surface 216 is axially spaced below sensor element 180 (e.g., there is a gap between planar surface 216 and sensor element 180), thereby allowing post 263 to deflect or flex the central portion of element 180. As previously described, sensor element 180 is made of a metallic disc (e.g., brass) having one or more layers of a piezoelectric ceramic material (e.g., lead zirconate titanate (PZT)) disposed thereon. When mechanical stress is applied to sensor element 180 due to deformation or deflection, the piezoelectric ceramic material generates an electrical potential (piezoelectric effect). Sensor element 180 is electrically coupled to circuit board 195 with wires such that the electrical potential generated by the piezoelectric ceramic material is detected and measured by electronics housed on circuit board 195 and stored in memory on circuit board 195. Since axial movement of sensor element 180 relative to post 263 while post 263 engages sensor element 180 induces stress in sensor element 180, post 263 may also be referred to herein as a pusher or actuator.

Referring now to Figure 16, 18, and 21, battery 190 has a cylindrical shape and is coupled to circuit board 195 with a pair of tabs 290. In particular, tabs 290 are disposed at the ends of battery 190 and are spring loaded to axially compress battery 190 therebetween. Tabs 290 are made of metal (e.g., steel), and provide both a physical and electrical connection between battery 190 and circuit board 195. Thus, tabs 290 enable battery 190 to provide power to circuit board 195 and the various functions performed by the components of board 195 during seismic survey operations, and enable board 195 to provide power to battery 190 during inductive charging operations.

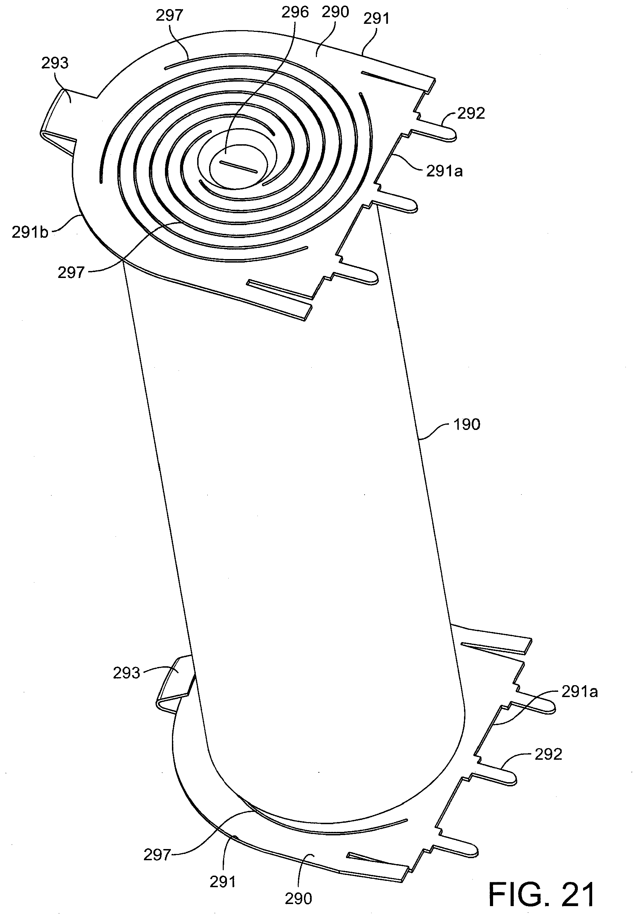

In this embodiment, each tab 290 is a resilient, semi-rigid element through which battery 190 is supported within pocket 244 of carrier 240. As best shown in Figure 21, each tab 290 comprises a disc 291, a plurality of prongs 292 extending laterally from disc 291, and a connector 293 extending radially from disc 291. As best shown in Figure 21, disc 291 has a semi-cylindrical shape including a straight edge 291a and a semi-circular edge 291b extending from side 291a. Prongs 292 extend from edge 291a and connector 293 extends from semi-circular edge 291b opposite prongs 292.

For purposes of clarity and further explanation, the tab 290 coupled to the top of battery 190 may be referred to as the upper tab 290 and the tab 290 coupled to the bottom of battery 190 may be referred to as the lower tab 290. As shown in Figures 15-20, the semi-circular edge 291b of upper tab 290 is seated in recess 250 of carrier 240 and the semi-circular edge 291b of lower tab 290 is seated in recess 251 of carrier 240. As best shown in Figures 18 and 20, connector 293 of upper tab 290 is seated in mating hole 252 and connector 293 of lower tab 290 is seated in mating hole 253. The positioning of edges 291b in recesses 250, 251 maintains the outer periphery of tabs 290 static or fixed relative to carrier 240 and outer housing 201, and the positioning of connectors 293 in holes 252, 253 prevents tabs 290 from rotating relative to carrier 240 and outer housing 201. Prongs 292 of each tab 290 extend through circuit board 195 and are soldered thereto.

Referring now to Figures 18 and 20, each tab 290 includes a central projection 296 extending axially therefrom and a plurality of uniformly circumferentially-spaced through cuts or slots 297 radially positioned between projection 296 and edges 291a, 291b. Tabs 290 are oriented such that central projections 296 face and extend toward battery 190. In addition, projection 296 of upper tab 290 is fixably coupled to the upper end of battery 190 and the central projection 296 of lower tab 290 is fixably coupled to the lower end of battery 190. In this embodiment, projections 296 are spot welded to the ends of battery 190. The upper end of post 263 contacts the center of lower tab 290.

Each slot 297 extends axially through tab 290. In addition, each slot 297 spirals radially outward moving from a radially inner end proximal central projection to edges 291a, 291b. In this embodiment, four slots 297 are provided, each pair of circumferentially adjacent inner ends of slots 297 are angularly spaced 90° apart about axis 245, each pair of circumferentially adjacent outer ends of slots 297 are angularly spaced 90° apart about axis 245, and each slot 297 extends along a spiral angle measured about axis 245 between its ends of about 360°. The radially inner ends of slots 297 are radially adjacent projection 296.

As previously described, tabs 290 provide electrical couplings between battery 190 and circuit board 195. In addition, tabs 290 function like flexures or biasing members in a manner similar to biasing members 152, 162 previously described. Accordingly, tabs 290 may also be referred to as flexures or biasing members. In particular, tabs 290 are resilient flexible elements that flex and elastically deform in response to relative axial movement of outer housing 201 and carrier 240 relative to battery 190, and radially bias battery 190 to a central or concentric position within pocket 244 radially spaced from carrier 240. In particular, the presence of spiral slots 297 enhances the flexibility of tab 290 in the region along which slots 297 are disposed, thereby allowing that region to flex in the axial direction (up and down) with relative ease. Spiral slots 297 also enhance the flexibility of each tab 290 in the radial direction. However, spiral slots 297 do not allow tabs 290 to flex as easily in the radial direction. Due to the relatively high degree of flexibility of tabs 290 in the axial direction, when an axial load is applied to tabs 290 by carrier 240 or battery 190, slots 297 generally allow free relative axial movement between central projections 296 and edges 291a, 291b. However, due to the more limited flexibility in the radial direction, when a radial load is applied to tabs 290 by carrier 240 or battery 190, slots 297 generally resist relative radial movement between the central projections 296 of tabs 290 and edges 291a, 291b, and tabs 290 bias battery 190 and carrier 240 back into substantial coaxial alignment with axes 205, 245.

Battery 190 is coaxially aligned with pocket 244 and oriented parallel to carrier 240 and housing 201. As will be described in more detail below, during seismic survey operations, carrier 240 and housing 201 axially reciprocate relative to battery 190 and post 263 in response to vibrations induced by seismic waves. Axial reciprocation of carrier 240 and housing 201 relative to battery 190 causes tabs 290 to flex. Thus, in this embodiment, the proof mass of sensor 200 includes battery 190, post 263 and tabs 290 (or at least a portion thereof that is static relative to battery 190).

Circuit board 195 includes the electronic circuitry of sensor 200. The electronic circuitry is coupled to sensor element 180 and is arranged to process the output of sensor element 180, for example by amplifying, digitally sampling, transmitting and/or storing the output of sensor element 180. In addition, LED 196 and photodiode 197 are positioned adjacent each other on the face of circuit board 195 immediately adjacent end 228a of light guide 228. Together, top 221, light guide 228, LED 196, and photodiode 197 enable the bidirectional communication of data to/from circuit board 195. In particular, a device outside sensor 200 can wirelessly communicate with circuit board 195 via the transmission of light from the external device through top 221 and guide 228 to photodiode 197; and circuit board 195 can wirelessly communicate with the external device via the transmission of light from LED 196 through guide 228 and top 221 to the external device.

During seismic surveys, a plurality of sensors 200 are coupled to the surface of the earth (e.g., in place of sensors 64, 66, 68 in system 50). Each sensor 200 may, for example, be attached to a spike which is pushed into the earth. Alternatively, the entire sensor 200 may be buried, or placed at depth in a borehole. Regardless of how sensors 200 are coupled to the earth, each sensor 200 is preferably positioned with axis 205 oriented in a generally vertical direction.

The arrival of a compressional seismic wave causes outer housing 201 and the components fixably coupled thereto (e.g., spool assembly 230, carrier 240, circuit board 195, light guide 228) to move in a generally vertical direction. The inertia of the proof mass within outer housing 201 (battery 190) causes the proof mass to resist moving with the displacement of the outer housing 201 and carrier 240, and consequently the outer housing 201 and carrier 240 reciprocate axially relative to the proof mass, as permitted by tabs 290. This movement causes tabs 290 to flex or be deflected and the load of the proof mass to be taken up by the sensing element 180. The axial reciprocation of the outer housing 201 and carrier 240 relative to the proof mass generally continues as the compressional seismic wave passes across sensor 200.

During the axial reciprocations of the outer housing 201 and carrier 240 relative to the proof mass, the sensor element 180 is cyclically deflected by post 263. As previously described, when mechanical stress is applied to sensor element 180 due to deformation or deflection by post 263, the piezoelectric ceramic material generates an electrical potential (piezoelectric effect). The electrical potential is connected to circuit board 195 via wires, where it is detected, and may be sampled and stored in memory as a measure of the amplitude of the seismic vibration. The data stored in memory on the circuit board 195 can be communicated to an external device for further consideration and analysis via LED 196, light guide 228, and top 221 as previously described.

As previously described, tabs 290 allow generally free relative axial movement of the proof mass relative to the outer housing 201. In the resting position, post 263 engages sensor element 180, and further, sensor element 180 supports the majority or substantially all of the weight of the proof mass. The axial reciprocation of the outer housing 201 and carrier 240 relative to the proof mass subjects sensor element 180 to increasing and decreasing degrees of stress. The variations in the stress experienced by sensor element is used to detect and measure the seismic waves. However, it should be appreciated that the ceramic material of the sensor element 180 may be damaged by excessive stress. Accordingly, the maximum axial movement of outer housing 201 relative to the the proof mass is limited to protect the sensor element 180 and prevent it from being overly stress. In the embodiment of sensor 200 shown and described above, the maximum axial movement of outer housing 201 to the proof mass is controlled and limited by carrier 240 - tabs 290 can deflect axially upward until upper tab 290 axially engages carrier 240 at upper end 246 of pocket 244 and tabs 290 can deflect axially downward until lower tab 290 axially engages carrier 240 at lower end 247 of pocket 244. In addition, as previously described, tabs 290 bias the proof mass to the centered position coaxially aligned with outer housing 201 and carrier 240. As a result, carrier 240 is radially spaced from the proof mass and is generally restrained from moving radially relative to the proof mass. Consequently, the movement of the outer housing 201 and carrier 240 relative to the proof mass is predominately in the axial direction, and further, the proof mass does not inhibit or interfere with the axial movement of carrier 240 and housing 201. The radial gap between the proof mass and cylindrical surface 241b of pocket 244 allows carrier 240 and outer housing 201 to move radially and laterally relative to the proof mass as tabs 290 flex, but limits the maximum relative radial and lateral movement. Namely, carrier 240 and housing 201 can move radially and laterally relative to the proof mass until the proof mass engages surface 248 defining pocket 244. Thus, surface 248 functions as radial motion limiter or stop.

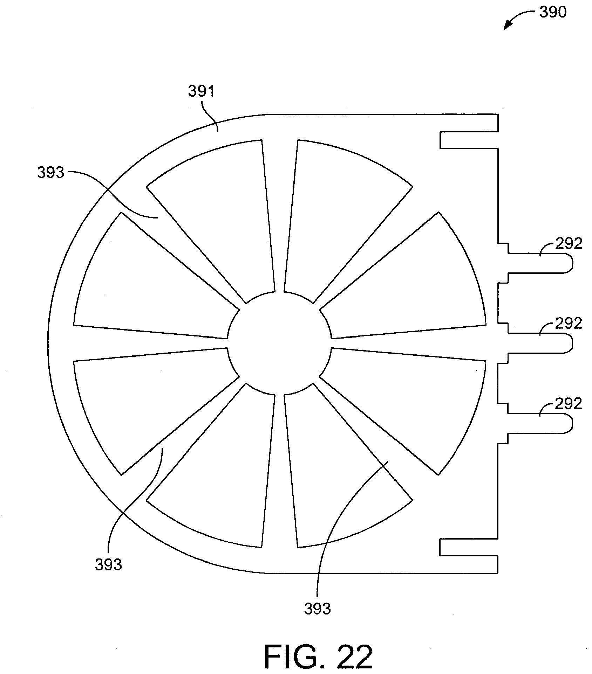

Although slots 297 with a spiral geometry are employed to enhance the flexibility of disc 291 and biasing member 290 in the axial direction in this embodiment of sensor 200, in other embodiments, different approaches can be used to enhance the flexibility of the disc. For example, slots having different geometries can be employed (e.g., radially extending slots as opposed to spiral slots). As another example, the disc of each biasing member (e.g., disc 291 of each tab 290) includes radially extending spokes or bridges extending between an outer periphery of the disc and the central portion of the disc, thereby creating a plurality of circumferentially-spaced pie shaped slots in the disc between each pair of adjacent spokes. Figure 22 illustrates an alternative embodiment of a tab 390 that functions in the same manner as tab 290 previously described and can be used in place of tab 290. As shown in Figure 22, in this embodiment, tab 390 comprises a disc 391 and a plurality of prongs 292 as previously described extending laterally from disc 391. Instead of spiral slots 297, disc 391 of tab 390 includes a plurality of uniformly circumferentially-spaced spokes 393 extending radially from a central portion of disc 391 to the outer periphery of disc 391. As yet another example, different materials can be used to form the disc, the thickness or geometry of the disc can be varied (e.g., thinner disc), etc.

In the embodiment of sensor 200 shown and described above, carrier 240 is a monolithic, single-piece component. However, in other embodiments, the carrier (e.g., carrier 240) comprises more than one section, and such sections may be discontinuous. In still other embodiments, the carrier is absent. In such embodiments, the other components of the sensor (e.g., circuit board 195, tabs 290, and sensor element 180) may be coupled directly to the outer housing (e.g., outer housing 201) or by way of individual carrier components.

While preferred embodiments have been shown and described, modifications thereof can be made by one skilled in the art without departing from the scope or teachings herein. The embodiments described herein are exemplary only and are not limiting. Many variations and modifications of the systems and apparatus described herein are possible within the scope of the disclosure as defined in the appended claims. For example, the relative dimensions of various parts, the materials from which the various parts are made, and other parameters can be varied. Accordingly, the scope of protection is not limited to the embodiments described herein, but is only limited by the claims that follow.

## Claims

1. A seismic sensor (100, 200) for a seismic survey, the seismic sensor (100, 200) comprising:
an outer housing (101, 201) having a central axis (105, 205), a first end (101a, 201a), and a second end (101b, 201b) opposite the first end (101a, 201a);
a proof mass (170, 190, 195; 190 263, 290) moveably disposed in the outer housing (101, 201), wherein the proof mass (170, 190, 195; 190 263, 290) includes a power source (190);
a sensor element (180) disposed in the outer housing (101, 201) and configured to detect the movement of the outer housing (101, 201) relative to the proof mass (170, 190, 195; 190 263, 290); and
electronic circuitry (195) coupled to the sensor element (180) and the power source (190), the electronic circuitry being configured to emit light;
**characterized in that**
the first end (101a, 201a) comprises a portion (120, 221) made of a clear material configured to transmit light having a frequency in the visible or infrared range of the electromagnetic spectrum,
wherein the seismic sensor (100, 200) further comprises
a light guide assembly (127, 143; 228) having a first end (127a, 228b) adjacent the clear portion (120, 221) of the first end (101a, 201a) of the outer housing (101, 201) and a second end (143a, 228a) adjacent the electronic circuitry (195), wherein the light guide assembly (127, 143; 228) is configured to transmit light in an axial direction between the first end (127a, 228b) of the light guide assembly (228) and the clear portion (120, 221) and to transmit light in a non-axial direction between the second end (143a, 228a) of the light guide assembly (127, 143; 228) and the electronic circuitry (195).

2. The seismic sensor (100, 200) of claim 1, wherein the light guide assembly (127; 143; 228) comprises a curved section between its first and second ends (127a, 228b; 143a, 228a) configured to change the direction of travel of light transmitted along the light guide assembly (127, 143; 228).

3. The seismic sensor (100, 200) of claim 2, wherein the curved section comprises a 90° bend.

4. The seismic sensor (100, 200) of any one of the preceding claims, wherein the electronic circuitry (195) is configured to emit light travelling in the non-axial direction and receive light travelling in the non-axial direction.

5. The seismic sensor (100, 200) of claim 4, wherein the electronic circuitry (195) comprises at least one of an LED (196) and a photodiode (197).

6. The seismic sensor (100) of any one of the preceding claims, wherein the proof mass (170, 190, 195) includes the electronic circuitry (195) and wherein the light guide assembly (127, 143) includes a first light guide (143) fixably coupled to the proof mass (170, 190, 195) and a second light guide (127) fixably coupled to the outer housing (101).

7. The seismic sensor (100) of claim 6, wherein the outer housing (101) includes a body (110) and a cap (120), wherein the second light guide (127) extends axially from the cap (120).

8. The seismic sensor (100) of claim 7, wherein the cap (120) is made of the clear material.

9. The seismic sensor (100) of any one of claims 6 to 8, wherein the second light guide (127) is coaxially aligned with the central axis (105) of the outer housing (101).

10. The seismic sensor (100) of any one of claims 6 to 9, wherein the first light guide (143) is axially spaced from the second light guide (127) so as to provide a gap (Gp) between adjacent ends (127b, 143b) of the first light guide (143) and the second light guide (127), wherein the gap (Gp) is configured to permit axial movement of the first light guide (143) relative to the second light guide (127).

11. A seismic sensor (100) for a seismic survey, the seismic sensor (100) comprising:
an outer housing (101) having a central axis (105), a first end (101a), a second end (101b) opposite the first end (101a), and an inner cavity (102);
a proof mass (170, 190, 195) moveably disposed in the outer housing (101), wherein the proof mass (170, 190, 195) includes a power source (190) and electronic circuitry (195) coupled to the power source (190), the electronic circuitry (195) being configured to emit light; and
a sensor element (180) disposed in the inner cavity (102) and configured to detect the movement of the outer housing (101) relative to the proof mass (170, 190, 195), wherein the sensor element (180) is coupled to the electronic circuitry (195);
**characterized in that** the seismic sensor (100) further comprises
a light guide assembly (127, 143) configured to transmit light from the electronic circuitry (195) to the outer housing (101), wherein the light guide assembly (127, 143) includes a first light guide (143) fixably coupled to the proof mass (170, 190, 195) and a second light guide (127) fixably coupled to the outer housing (101).

12. The seismic sensor (100) of claim 11, wherein the electronic circuitry (195) comprises an LED (196) and a photodiode (197) and wherein the first light guide (143) has a first end (143a) proximal the LED (196) and the photodiode (197) and a second end (143b) distal the electronic circuitry (195);
wherein the second light guide (127) has a first end (127a) fixably coupled to the outer housing (101) and a second end (127b) axially adjacent the second end (143b) of the first light guide (127);
wherein a gap (Gp) is axially positioned between the second end (143b) of the first light guide (143) and the second end (127b) of the second light guide (127).

## Patentansprüche

1. Seismischer Sensor (100, 200) für eine seismische Vermessung, wobei der seismische Sensor (100, 200) umfasst:
ein äußeres Gehäuse (101, 201) mit einer Zentralachse (105, 205), einem ersten Ende (101a, 201a) und einem zweiten Ende (101b, 201b), das dem ersten Ende (101a, 201a) gegenüberliegt,
eine Referenzmasse (170, 190, 195; 190, 263, 290), die beweglich in dem äußeren Gehäuse (101, 201) angeordnet ist, wobei die Referenzmasse (170, 190, 195; 190, 263, 290) eine Stromquelle (190) aufweist,
ein Sensorelement (180), das in dem äußeren Gehäuse (101, 201) angeordnet ist und das ausgestaltet ist, die Bewegung des äußeren Gehäuses (101, 201) relativ zu der Referenzmasse (170, 190, 195; 190, 263, 290) zu erfassen, und
eine elektronische Schaltung (195), die mit dem Sensorelement (180) und der Stromquelle (190) gekoppelt ist, wobei die elektronische Schaltung ausgestaltet ist, Licht zu emittieren,
**gekennzeichnet dadurch, dass**
das erste Ende (101a, 201a) einen Abschnitt (120, 221) aufweist, der aus einem klarem Material hergestellt ist, das dazu ausgestaltet ist, Licht mit einer Frequenz im sichtbaren oder infraroten Bereich des elektromagnetischen Spektrums durchzulassen,
wobei der seismische Sensor (100, 200) ferner umfasst:
eine Lichtführanordnung (127, 143, 228) mit einem ersten Ende (127a, 228b) benachbart zu dem klaren Abschnitt (120, 221) des ersten Endes (101a, 201a) der äußeren Gehäuses (101, 201) und einem zweiten Ende (143a, 228a) benachbart zu der elektronischen Schaltung (195), wobei die Lichtführanordnung (127, 143, 228) ausgestaltet ist, Licht in einer axialen Richtung zwischen dem ersten Ende (127a, 228b) der Lichtführanordnung (228) und dem klaren Abschnitt (120, 221) zu übermitteln und Licht in einer nicht-axialen Richtung zwischen dem zweiten Ende (143a, 228a) der Lichtführanordnung (127, 143,228) und der elektronischen Schaltung (195) zu übermitteln.

2. Seismischer Sensor (100, 200) nach Anspruch 1, wobei die Lichtführanordnung (127, 143, 228) einen gekrümmten Abschnitt zwischen seinem ersten und zweiten Ende (127a, 228b; 143a, 228a) aufweist, der ausgestaltet ist, die Ausbreitungsrichtung von Licht zu ändern, das entlang der Lichtführanordnung (127, 143, 228) übermittelt wird.

3. Seismischer Sensor (100, 200) nach Anspruch 2, wobei der gekrümmte Abschnitt eine 90°-Biegung aufweist.

4. Seismischer Sensor (100, 200) nach einem der vorstehenden Ansprüche, wobei die elektronische Schaltung (195) ausgestaltet ist, Licht zu emittieren, das sich in der nicht-axialen Richtung ausbreitet, und Licht zu empfangen, das sich in der nicht-axialen Richtung ausbreitet.

5. Seismischer Sensor (100, 200) nach Anspruch 4, wobei die elektronische Schaltung (195) wenigstens eine LED (196) und/oder eine Fotodiode (197) aufweist.

6. Seismischer Sensor (100) nach einem der vorstehenden Ansprüche, wobei die Referenzmasse (170, 190, 195) die elektronische Schaltung (195) aufweist und wobei die Lichtführanordnung (127, 143) eine erste Lichtführung (127), die fixierbar mit der Referenzmasse (170, 190, 195) gekoppelt ist, und eine zweite Lichtführung (127) aufweist, die fixierbar mit dem äußeren Gehäuse (101) gekoppelt ist.

7. Seismischer Sensor (100) nach Anspruch 6, wobei das äußere Gehäuse (101) einen Körper (110) und eine Kappe (120) aufweist, wobei sich die zweite Lichtführung (127) axial von der Kappe (120) erstreckt.

8. Seismischer Sensor (100) nach Anspruch 7, wobei die Kappe (120) aus dem klaren Material hergestellt ist.

9. Seismischer Sensor (100) nach einem der Ansprüche 6 bis 8, wobei die zweite Lichtführung (127) koaxial mit der Zentralachse (105) des äußeren Gehäuses (101) ausgerichtet ist.

10. Seismischer Sensor (100) nach einem der Ansprüche 6 bis 9, wobei die erste Lichtführung (127) axial von der zweiten Lichtführung (127) beabstandet ist, um eine Lücke (Gp) zwischen benachbarten Enden (127b, 143b) der ersten Lichtführung (143) und der zweiten Lichtführung (127) bereitzustellen, wobei die Lücke (Gp) ausgestaltet ist, eine axiale Bewegung der ersten Lichtführung (143) relativ zur zweiten Lichtführung (127) zu erlauben.

11. Seismischer Sensor (100) für eine seismische Untersuchung, wobei der seismische Sensor (100) umfasst:
ein äußeres Gehäuse (101) mit einer Zentralachse (105), einem ersten Ende (101a), einem zweiten Ende (101b), das dem ersten Ende (101a) gegenüberliegt, und einer inneren Höhlung (102),
eine Referenzmasse (170, 190, 195), die beweglich in dem äußeren Gehäuse (101) angeordnet ist, wobei die Referenzmasse (170, 190, 195) eine Stromquelle (190) und eine elektronische Schaltung (195) aufweist, die mit der Stromquelle (190) gekoppelt ist, wobei die elektronische Schaltung (195) ausgestaltet ist, Licht zu emittieren, und
einem Sensorelement (180), das in der inneren Höhlung (120) angeordnet ist und das ausgestaltet ist, die Bewegung des äußeren Gehäuses (101) relativ zu der Referenzmasse (170, 190, 195) zu erfassen, wobei das Sensorelement (180) mit der elektronischen Schaltung (195) gekoppelt ist,
**gekennzeichnet dadurch, dass** der seismische Sensor (100) ferner
eine Lichtführanordnung (127, 143) umfasst, die ausgestaltet ist, Licht von der elektronischen Schaltung (195) zu dem äußeren Gehäuse (101) zu übermitteln, wobei die Lichtführanordnung (127, 143) eine erste Lichtführung (143), die fixierbar mit der Referenzmasse (170, 190, 195) gekoppelt ist, und eine zweite Lichtführung (127) aufweist, die fixierbar mit dem äußeren Gehäuse (101) gekoppelt ist.

12. Seismischer Sensor (100) nach Anspruch 11, wobei die elektronische Schaltung (195) eine LED (196) und eine Fotodiode (197) aufweist, und wobei die erste Lichtführung (143) ein erstes Ende (143a) proximal zu der LED (196) und der Fotodiode (197) und ein zweites Ende (143b) distal zu der elektronischen Schaltung (195) aufweist,
wobei die zweite Lichtführung (127) ein erstes Ende (127a), das fixierbar mit dem äußeren Gehäuse (101) gekoppelt ist, und ein zweites Ende (127b) aufweist, das axial benachbart zu dem zweiten Ende (143b) der ersten Lichtführung (127) ist,
wobei eine Lücke (Gp) axial zwischen dem zweiten Ende (143b) der ersten Lichtführung (143) und dem zweiten Ende (127b) der zweiten Lichtführung (127) angeordnet ist.

## Revendications

1. Capteur sismique (100, 200) pour un levé sismique, le capteur sismique (100, 200) comprenant :
un boîtier extérieur (101, 201) ayant un axe central (105, 205), une première extrémité (101a, 201a) et une deuxième extrémité (101b, 201b) opposée à la première extrémité (101a, 201a),
une masse de référence (170, 190, 195 ; 190, 263, 290) disposée de manière mobile dans le boîtier extérieur (101, 201), la masse de référence (170, 190, 195 ; 190, 263, 290) comprenant une source d'énergie (190),
un élément capteur (180) disposé dans le boîtier extérieur (101, 201) et configuré pour détecter le mouvement du boîtier extérieur (101, 201) par rapport à la masse de référence (170, 190, 195 ; 190, 263, 290), et
un circuit électronique (195) couplé à l'élément capteur (180) et à la source d'énergie(190), le circuit électronique étant configuré pour émettre de la lumière,
**caractérisé en ce que**
la première extrémité (101a, 201a) comprend une partie (120, 221) faite d'un matériau transparent adapté pour transmettre la lumière à une fréquence dans la gamme visible ou infrarouge du spectre électromagnétique,
dans lequel le capteur sismique (100, 200) comprend en outre :
un ensemble de guidage de lumière (127, 143, 228) ayant une première extrémité (127a, 228b) adjacente à la partie transparente (120, 221) de la première extrémité (101a, 201a) du boîtier extérieur (101, 201) et une seconde extrémité (143a, 228a) adjacente au circuit électronique (195), l'ensemble de guidage de lumière (127, 143, 228) étant configuré pour transmettre de la lumière dans une direction axiale entre la première extrémité (127a, 228b) de l'ensemble de guidage de lumière (228) et la partie claire (120, 221) et pour transmettre de la lumière dans une direction non axiale entre la deuxième extrémité (143a, 228a) de l'ensemble de guidage de lumière (127, 143, 228) et le circuit électronique (195).

2. Capteur sismique (100, 200) selon la revendication 1, dans lequel l'ensemble de guidage de la lumière (127, 143, 228) comprend une partie incurvée entre ses première et deuxième extrémités (127a, 228b ; 143a, 228a), qui est configurée pour modifier la direction de propagation de la lumière transmise le long de l'ensemble de guidage de la lumière (127, 143, 228).

3. Capteur sismique (100, 200) selon la revendication 2, dans lequel la partie incurvée présente une courbure de 90°.

4. Capteur sismique (100, 200) selon l'une quelconque des revendications précédentes, dans lequel le circuit électronique (195) est configuré pour émettre de la lumière se propageant dans la direction non axiale et pour recevoir de la lumière se propageant dans la direction non axiale.

5. Capteur sismique (100, 200) selon la revendication 4, dans lequel le circuit électronique (195) comprend au moins l'un parmi une LED (196) et une photodiode (197).

6. Capteur sismique (100) selon l'une quelconque des revendications précédentes, dans lequel la masse de référence (170, 190, 195) comprend le circuit électronique (195) et dans lequel l'ensemble de guidage de lumière (127, 143) comprend un premier guide de lumière (127) couplé de manière fixe à la masse de référence (170, 190, 195) et un deuxième guide de lumière (127) couplé de manière fixe au boîtier extérieur (101).

7. Capteur sismique (100) selon la revendication 6, dans lequel le boîtier extérieur (101) comprend un corps (110) et un capuchon (120), le deuxième guide de lumière (127) s'étendant axialement depuis le capuchon (120).

8. Capteur sismique (100) selon la revendication 7, dans lequel le capuchon (120) est fabriqué à partir du matériau transparent.

9. Capteur sismique (100) selon l'une quelconque des revendications 6 à 8, dans lequel le deuxième guide de lumière (127) est aligné coaxialement avec l'axe central (105) du boîtier extérieur (101).

10. Capteur sismique (100) selon l'une des revendications 6 à 9, dans lequel le premier guide de lumière (127) est espacé axialement du deuxième guide de lumière (127) de manière à ménager un espace (Gp) entre des extrémités adjacentes (127b, 143b) du premier guide de lumière (143) et du deuxième guide de lumière (127), l'espace (Gp) étant configuré pour permettre un déplacement axial du premier guide de lumière (143) par rapport au deuxième guide de lumière (127).

11. Capteur sismique (100) pour une levé sismique, le capteur sismique (100) comprenant:
un boîtier extérieur (101) ayant un axe central (105), une première extrémité (101a), une deuxième extrémité (101b) opposée à la première extrémité (101a), et une cavité intérieure (102),
une masse de référence (170, 190, 195) disposée de manière mobile dans le boîtier extérieur (101), la masse de référence (170, 190, 195) comprenant une source d'énergie (190) et un circuit électronique (195) couplé à la source d'énergie(190), le circuit électronique (195) étant adapté pour émettre de la lumière, et
un élément de détection (180) qui est disposé dans la cavité intérieure (120) et qui est conçu pour détecter le mouvement du boîtier extérieur (101) par rapport à la masse de référence (170, 190, 195), l'élément de détection (180) étant couplé au circuit électronique (195),
**caractérisé en ce que** le capteur sismique (100) comprend en outre
un ensemble de guidage de lumière (127, 143) configuré pour transmettre de la lumière du circuit électronique (195) au boîtier extérieur (101), l'ensemble de guidage de lumière (127, 143) comprenant un premier guide de lumière (143) couplé de manière fixe à la masse de référence (170, 190, 195) et un second guide de lumière (127) couplé de manière fixe au boîtier extérieur (101).

12. Capteur sismique (100) selon la revendication 11, dans lequel le circuit électronique (195) comprend une LED (196) et une photodiode (197), et dans lequel le premier guide de lumière (143) a une première extrémité (143a) proximale à la LED (196) et à la photodiode (197) et une deuxième extrémité (143b) distale au circuit électronique (195),
dans lequel le second guide de lumière (127) comprend une première extrémité (127a) couplée de manière fixe au boîtier extérieur (101) et une seconde extrémité (127b) axialement adjacente à la seconde extrémité (143b) du premier guide de lumière (127),
dans lequel un espace (Gp) est disposé axialement entre la seconde extrémité (143b) du premier guide de lumière (143) et la seconde extrémité (127b) du second guide de lumière (127).
